(19) Europäisches Patentamt / European Patent Office / Office européen des brevets

(11) **EP 4 429 248 A1**

(12) **EUROPEAN PATENT APPLICATION**
published in accordance with Art. 153(4) EPC

(43) Date of publication:
**11.09.2024 Bulletin 2024/37**

(21) Application number: **22890366.2**

(22) Date of filing: **02.11.2022**

(51) International Patent Classification (IPC):
**H04N 19/54** (2014.01)  **H04N 19/70** (2014.01)
**H04N 19/96** (2014.01)  **H04N 19/597** (2014.01)
**H04N 19/44** (2014.01)  **H04N 19/105** (2014.01)

(52) Cooperative Patent Classification (CPC):
**H04N 19/105; H04N 19/44; H04N 19/54;**
**H04N 19/597; H04N 19/70; H04N 19/96**

(86) International application number:
**PCT/KR2022/017036**

(87) International publication number:
**WO 2023/080635 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.11.2021  KR 20210148386**

(71) Applicant: **LG Electronics Inc.**
**Yeongdeungpo-gu**
**Seoul 07336 (KR)**

(72) Inventor: **HUR, Hyejung**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **DEVICE FOR TRANSMITTING POINT CLOUD DATA, METHOD FOR TRANSMITTING POINT CLOUD DATA, DEVICE FOR RECEIVING POINT CLOUD DATA, AND METHOD FOR RECEIVING POINT CLOUD DATA**

(57)   Disclosed are a method for transmitting point cloud data, a device for transmitting cloud data, a method for receiving cloud data, and an apparatus for receiving cloud data according to embodiments. A method for transmitting point cloud data according to embodiments may comprise the steps of: encoding geometry data of point cloud data; encoding attribute data of the point cloud data on the basis of the geometry data; and transmitting the encoded geometry data, the encoded attribute data, and signaling data.

FIG. 18

EP 4 429 248 A1

**Description**

**TECHNICAL FIELD**

Embodiments relate to a method and apparatus for processing point cloud content.

**BACKGROUND**

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

**DISCLOSURE**

**TECHNICAL PROBLEM**

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Another object of the present disclosure is to provide a point cloud data transmission device, a point cloud data transmission method, a point cloud data reception device, and a point cloud data reception method for improving the compression performance of the point cloud by improving the technique of encoding attribute information of geometry-based point cloud compression (G-PCC).

Another object of the present disclosure is to provide a point cloud data transmission device, a point cloud data transmission method, a point cloud data reception device, and a point cloud data reception method for efficiently compressing and transmitting point cloud data captured by LiDAR equipment and receiving the same.

Another object of the present disclosure is to provide a point cloud data transmission device, a point cloud data transmission method, a point cloud data reception device, and a point cloud data reception method for efficient inter prediction compression of point cloud data captured by LiDAR equipment.

The technical scope of the embodiments is not limited to the aforementioned technical objects, and may be extended to other technical objects that may be inferred by those skilled in the art based on the entire contents disclosed herein.

**TECHNICAL SOLUTION**

To achieve the above objects and other objects, the embodiments provide a point cloud data transmission method including encoding geometry data of point cloud data, encoding attribute data of the point cloud data based on the geometry data, and transmitting the encoded geometry data, the encoded attribute data, and signaling data.

The geometry encoding may include compressing the geometry data by applying inter prediction to the geometry data, and the signaling data includes inter prediction related information.

The geometry encoding may include generating point information for matching of points belonging to a current frame and one or more reference frames in group of frames (GoF) in which the point cloud data is configured as a plurality of frames, and compressing the geometry data by applying inter prediction to the geometry data based on the point information.

The geometry encoding may include obtaining one or more inter prediction modes of a current point of a current frame based on information on a number of frames in the GoF and a frame type in the GoF, selecting an optimal inter prediction mode from among the obtained one or more inter prediction modes, and obtaining residual information of the current point based on the selected inter prediction mode and position information of the current point.

The inter prediction related information may include information for identifying the number of the frames in the GoF and information about the frame type in the GoF.

The point cloud data may be captured by a LiDAR including one or more lasers.

The geometry encoding may include matching points having a closest azimuth, radius, elevation, or laser ID

to points for inter prediction from among points of the current frame and one or more reference frames.

According to embodiments, a point cloud data transmitting device includes a geometry encoder configured to encode geometry data of point cloud data, an attribute encoder configured to encode attribute data of the point cloud data based on the geometry data, and a transmitter configured to transmit the encoded geometry data, the encoded attribute data, and signaling data.

The geometry encoder may compress the geometry data by applying inter prediction, and the signaling data may include inter prediction related information.

The geometry encoder may be configured to generate point information for matching of points belonging to a current frame and one or more reference frames in group of frames (GoF) in which the point cloud data is configured as a plurality of frames and compress the geometry data by applying inter prediction to the geometry data based on the point information.

The geometry encoder may be configured to obtain one or more inter prediction modes of a current point of a current frame based on information on a number of frames in the GoF and a frame type in the GoF, select an optimal inter prediction mode from among the obtained one or more inter prediction modes, and obtain residual information of the current point based on the selected inter prediction mode and position information of the current point.

The inter prediction related information may include information for identifying the number of the frames in the GoF and information about the frame type in the GoF.

The point cloud data may be captured by a LiDAR including one or more lasers.

The geometry encoder may be configured to match points having a closest azimuth, radius, elevation, or laser ID to points for inter prediction from among points of the current frame and one or more reference frames.

According to embodiments, a point cloud data reception method includes receiving geometry data, attribute data, and signaling data, decoding the geometry data based on the signaling data, decoding the attribute data based on the signaling data and the decoded geometry data, and rendering point cloud data restored based on the decoded geometry data and the decoded attribute data.

The geometry decoding may include restoring the geometry data by applying inter prediction to the geometry data based on the signaling data, and the signaling data may include inter prediction related information.

The inter prediction related information may include information for identifying a number of frames in group of frames (GoF), information on a frame type in the GoF, and prediction mode information for each point.

The point cloud data may be captured by a LiDAR including one or more lasers at a transmitting side.

## ADVANTAGEOUS EFFECTS

The point cloud data transmission method, transmission device, point cloud data reception method, and reception device according to embodiments may provide a point cloud service with high quality.

The point cloud data transmission method, transmission device, point cloud data reception method, and reception device according to embodiments may achieve various video codec methods.

The point cloud data transmission method, transmission device, point cloud data reception method, and reception device according to embodiments may provide general-purpose point cloud content such as autonomous driving services.

The point cloud data transmission method, transmission device, point cloud data reception method, and reception device according to embodiments may improve parallel processing and provide scalability by performing spatial adaptive partitioning of point cloud data for independent encoding and decoding of point cloud data.

The point cloud data transmission method, transmission device, point cloud data reception method, and reception device according to embodiments may improve encoding and decoding performance of point cloud by spatially partitioning point cloud data in units of tiles and/or slices to perform encoding and decoding and signaling data required therefor.

The point cloud data transmission method and transmission device according to embodiments may increase compression efficiency of geometry information by allowing inter prediction to be performed when prediction tree-based geometry information is coded.

The point cloud data transmission method and transmission device according to embodiments may effectively compress geometry information in point cloud content that requires low latency coding by performing inter prediction when prediction tree-based geometry information is coded.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates an exemplary point cloud content providing system according to embodiments.

FIG. 2 is a block diagram illustrating a point cloud content providing operation according to embodiments.

FIG. 3 illustrates an exemplary process of capturing a point cloud video according to embodiments.

FIG. 4 illustrates an exemplary block diagram of point cloud video encoder according to embodiments.

FIG. 5 illustrates an example of voxels in a 3D space according to embodiments.

FIG. 6 illustrates an example of octree and occupancy code according to embodiments.

FIG. 7 illustrates an example of a neighbor node pattern according to embodiments.

FIG. 8 illustrates an example of point configuration of a point cloud content for each LOD according to embodiments.

FIG. 9 illustrates an example of point configuration of a point cloud content for each LOD according to embodiments.

FIG. 10 illustrates an example of a block diagram of a point cloud video decoder according to embodiments.

FIG. 11 illustrates an example of a point cloud video decoder according to embodiments.

FIG. 12 illustrates a configuration for point cloud video encoding of a transmission device according to embodiments.

FIG. 13 illustrates a configuration for point cloud video decoding of a reception device according to embodiments.

FIG. 14 illustrates an exemplary structure operatively connectable with a method/device for transmitting and receiving point cloud data according to embodiments.

FIG. 15 is a diagram illustrating an example of a predictive tree structure according to embodiments.

FIG. 16 is a diagram showing an example of a GOF including a plurality of frames according to embodiments.

FIG. 17 is a diagram illustrating another example of a point cloud transmission device according to embodiments.

FIG. 18 is a diagram showing an example of operations of a geometry encoder and an attribute encoder according to embodiments.

FIG. 19 is a diagram showing another exemplary point cloud reception device according to embodiments.

FIG. 20 is a diagram showing an example of operations of a geometry decoder and an attribute decoder according to embodiments.

FIG. 21 illustrates an example of a bitstream structure of point cloud data for transmission/reception according to embodiment.

FIG. 22 shows an embodiment of a syntax structure of a sequence parameter set (SPS) (seq_parameter_set_rbsp()) according to the present disclosure.

FIG. 23 is a diagram showing a syntax structure of a geometry parameter set (GPS) (geometry_parameter_set()) according to an embodiment of the present disclosure.

FIG. 24 shows a syntax structure of a tile parameter set (tile_parameter_set()) (TPS) according to an embodiment of the present disclosure.

FIG. 25 is a diagram showing an example of a syntax structure of a geometry data unit (geometry_data _unit()) according to embodiments.

FIG. 26 is a diagram showing an example of a syntax structure of a geometry slice header (geometry_slice_header()) according to embodiments.

FIG. 27 is a diagram showing an example of a syntax structure of a geometry prediction tree data (geometry_predtree_data()) according to embodiments.

FIG. 28 is a diagram showing an example of a syntax structure of a geometry_predtree_node (depth, nodeIdx).

## BEST MODE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in this specification have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

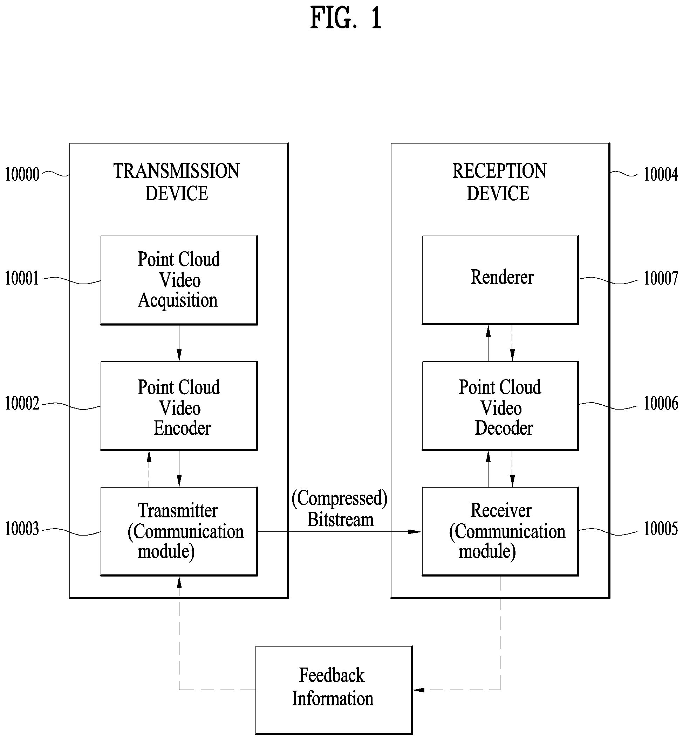

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component or module) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like).

The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

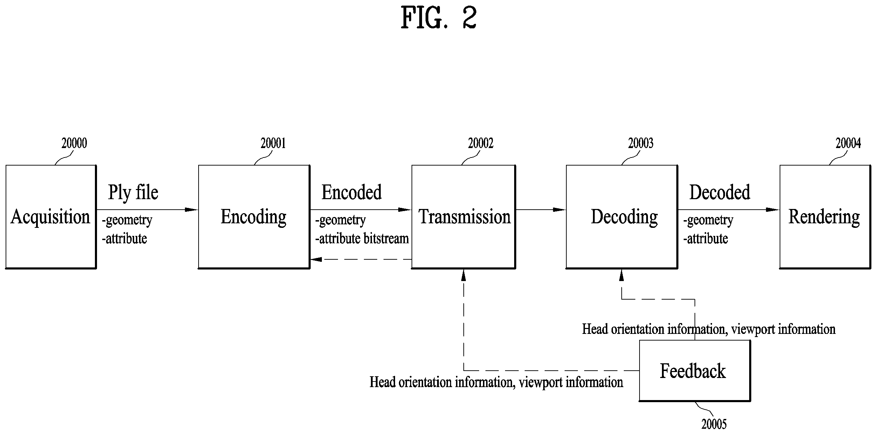

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance.

According to embodiments, the geometry may be called positions, geometry information, geometry data, or the like, and the attribute may be called attributes, attribute information, attribute data, or the like.

The point cloud content providing system (for example, the point cloud transmission device 10000 or the point cloud video acquisition unit 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

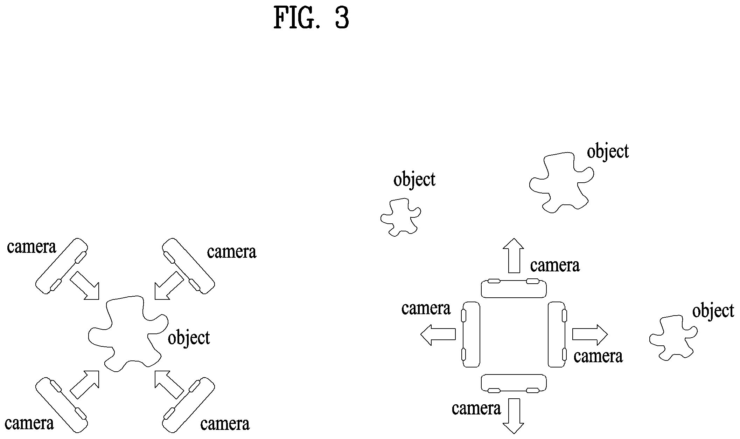

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in FIG. 3, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

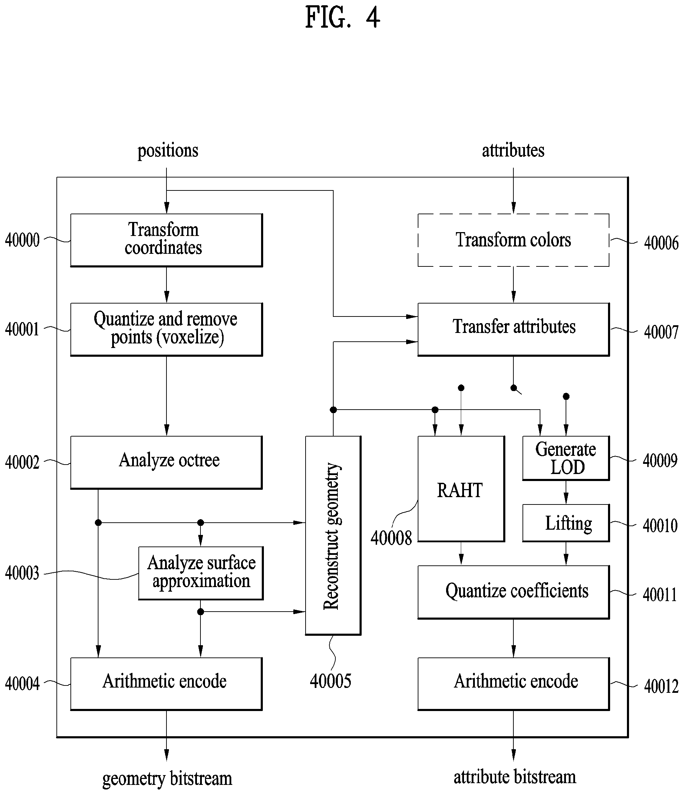

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry information. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D space. Points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solid-state memory devices).

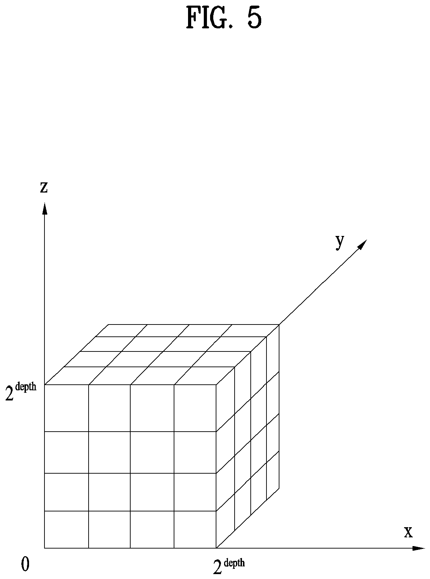

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles $(0, 0, 0)$ and $(2^d, 2^d, 2^d)$ is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

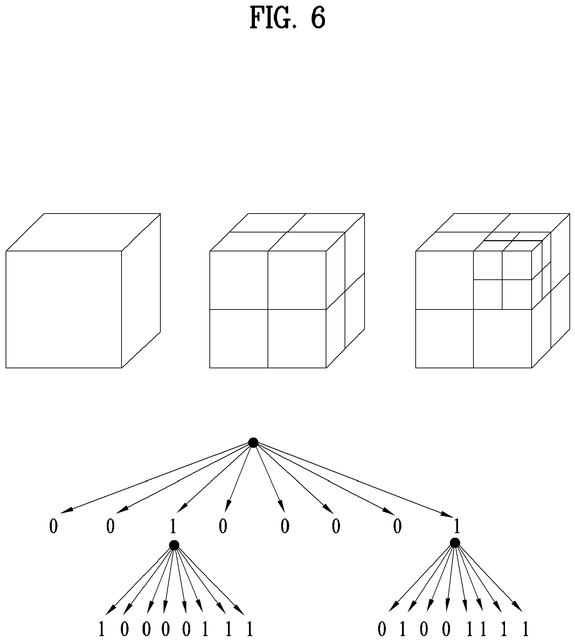

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, $2^d$ may be set to a value constituting the smallest bounding box surrounding all points of the point cloud content (or point cloud video). Here, d denotes the depth of the octree. The value of d is determined in Equation 1. In Equation 1, $(x^{int}_n, y^{int}_n, z^{int}_n)$ denotes the positions (or position values) of quantized points.

Equation 1

$$\mathrm{d} = Ceil\left(Log2\left(Max\left(x_n^{int}, y_n^{int}, z_n^{int}, n = 1, \ldots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (for example, the arithmetic encoder 40004) according to the embodiments may perform entropy encoding on the occupancy codes. In order to increase the compression efficiency, the point cloud video encoder may perform intra/inter-coding on the occupancy codes. The reception device (for example, the reception device 10004 or the point cloud video decoder 10006) according to the embodiments reconstructs the octree based on the occupancy codes.

The point cloud video encoder (for example, the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud video encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

## Equation 2

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Table 1. Triangles formed from vertices ordered 1,...,n

[Table 1]

| *n* | **Triangles** |
|---|---|
| **3** | (1,2,3) |
| **4** | (1,2,3), (3,4,1) |
| **5** | (1,2,3), (3,4,5), (5,1,3) |
| **6** | (1,2,3), (3,4,5), (5,6,1), (1,3,5) |
| **7** | (1,2,3), (3,4,5), (5,6,7), (7,1,3), (3,5,7) |
| **8** | (1,2,3), (3,4,5), (5,6,7), (7,8,1), (1,3,5), (5,7,1) |
| **9** | (1,2,3), (3,4,5), (5,6,7), (7,8,9), (9,1,3), (3,5,7), (7,9,3) |
| **10** | (1,2,3), (3,4,5), (5,6,7), (7,8,9), (9,10,1), (1,3,5), (5,7,9), (9,1,5) |
| **11** | (1,2,3), (3,4,5), (5,6,7), (7,8,9), (9,10,11), (11,1,3), (3,5,7), (7,9,11), (11,3,7) |
| **12** | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

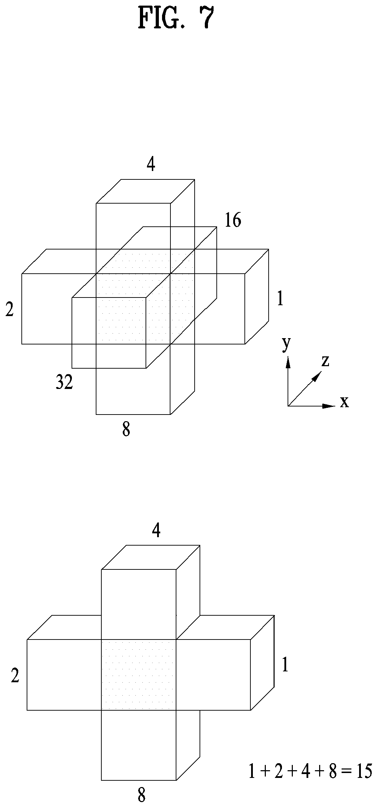

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The up part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The down part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (for example, based on a table by which 64 is changed to 10 or 6).

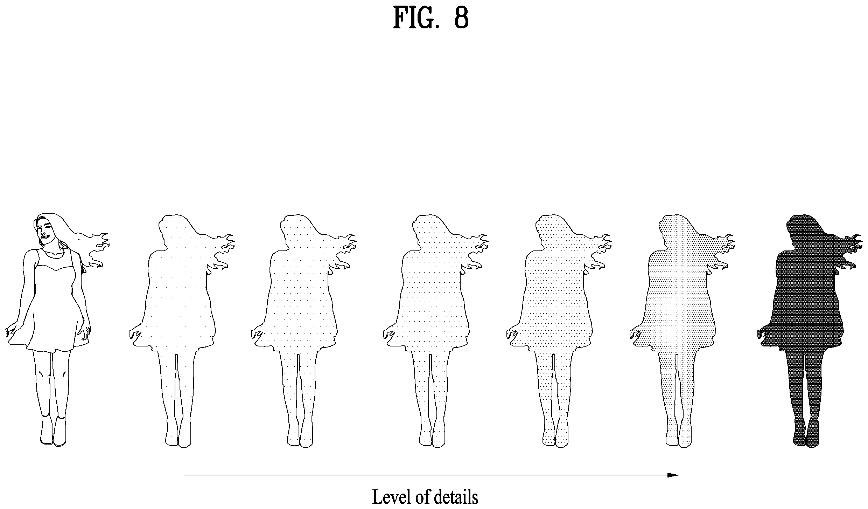

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (for example, the LOD generator 40009) may classify (reorganize or group) points by LOD. FIG. 8 shows the point cloud content corresponding to LODs. The leftmost picture in FIG. 8 represents original point cloud content. The second picture from the left of FIG. 8 represents distribution of the points in the lowest LOD, and the rightmost picture in FIG. 8 represents distribution of the points in the highest LOD. That is, the points in the lowest LOD are sparsely distributed, and the **points** in the highest LOD are densely distributed. That is, as the LOD rises in the direction pointed by the arrow indicated at the bottom of FIG. 8, the space (or distance) between points is narrowed.

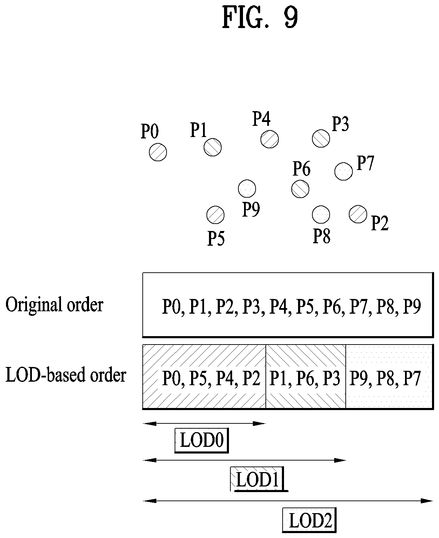

FIG. 9 illustrates an example of point configuration for each LOD according to embodiments.

As described with reference to FIGS. 1 to 8, the point cloud content providing system, or the point cloud video encoder (for example, the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (for example, the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in table 3.

[Table 2]

| int PCCQuantization(int value, int quantStep) { |
| --- |
| if( value >=0) { |
| return floor(value / quantStep + 1.0 / 3.0); |
| } else { |
| return -floor(-value / quantStep + 1.0 / 3.0); |
| } |
| } |

[Table 3]

| int PCCInverseQuantization(int value, int quantStep) { |
| --- |
| if( quantStep ==0) { |
| return value; |
| } else { |
| return value * quantStep; |
| } |
| } |

When the predictor of each point has neighbor points, the point cloud video encoder (e.g., the arithmetic encoder 40012) according to the embodiments may perform entropy coding on the quantized and inversely quantized residual attribute values as described above. When the predictor of each point has no neighbor point, the point cloud video encoder according to the embodiments (for example, the arithmetic encoder 40012) may perform entropy coding on the attributes of the corresponding point without performing the above-described operation. The point cloud video encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows. 1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l_{x,y,z}}$ denotes the average attribute value of voxels at level $l$. $g_{l_{x,y,z}}$ may be calculated based on $g_{l+1_{2x,y,z}}$ and $g_{l+1_{2x+1,y,z}}$. The weights for $g_{l+1_{2x,y,z}}$ and $g_{l+1_{2x+1,y,z}}$ are $w1 = w_{l_{2x,y,z}}$ and $w2 = w_{l_{2x+1,y,z}}$.

<u>Equation 3</u>

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix} \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 40012). The weights are calculated as $w_{l-1\,x,y,z} = w_{l_{2x,y,z}} + w_{l_{2x+1,y,z}}$. The root node is created through the $g_{1\,0,0,0}$ and $g_{1\,0,0,1}$ as Equation 4.

<u>Equation 4</u>

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

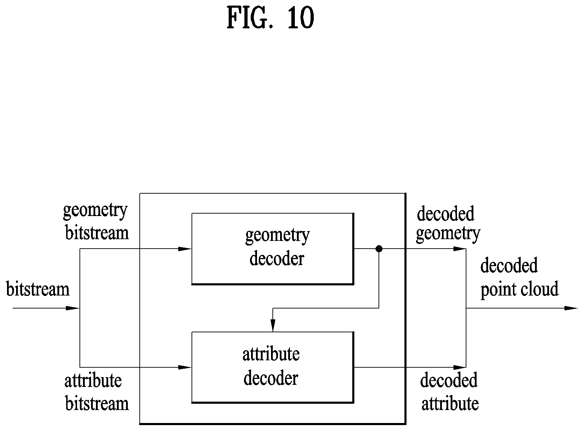

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

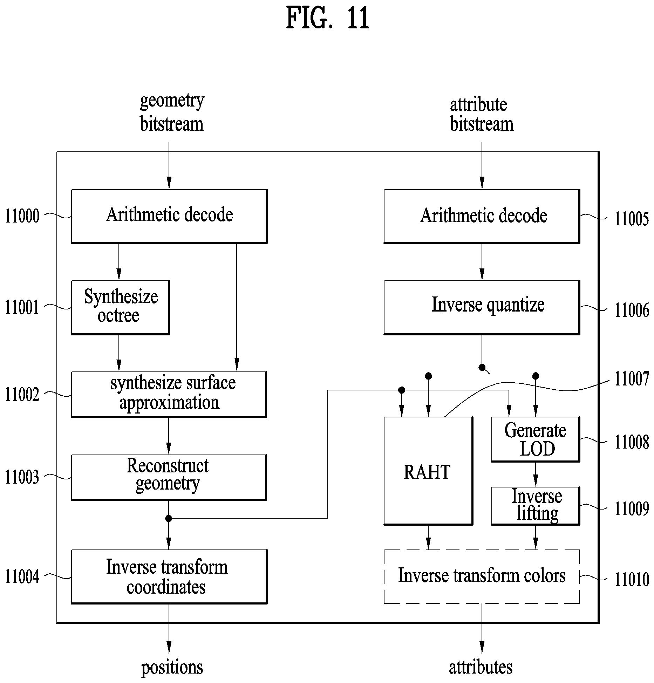

FIG. 11 illustrates a point cloud video decoder according to embodiments.

The point cloud video decoder illustrated in FIG. 11 is an example of the point cloud video decoder illustrated in FIG. 10, and may perform a decoding operation, which is an inverse process of the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

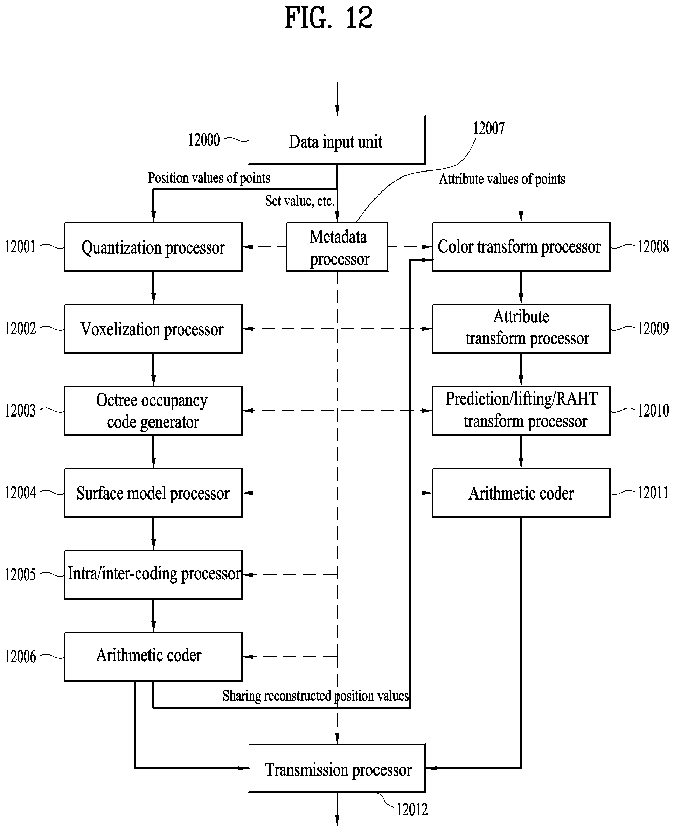

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud video encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9.

Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 40012.

The transmission processor 12012 according to the embodiments may transmit each bitstream containing encoded geometry and/or encoded attributes and metadata, or transmit one bitstream configured with the encoded geometry and/or the encoded attributes and the metadata. When the encoded geometry and/or the encoded attributes and the metadata according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream Geom0$^0$ and one or more attribute bitstreams Attr0$^0$ and Attr1$^0$.

The slice is a series of a syntax element representing in whole or in part of the coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

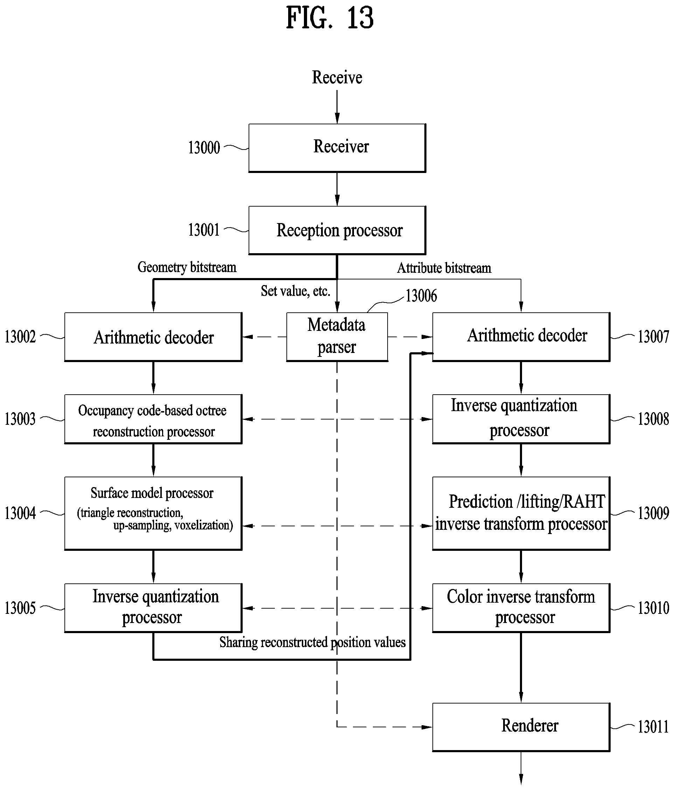

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

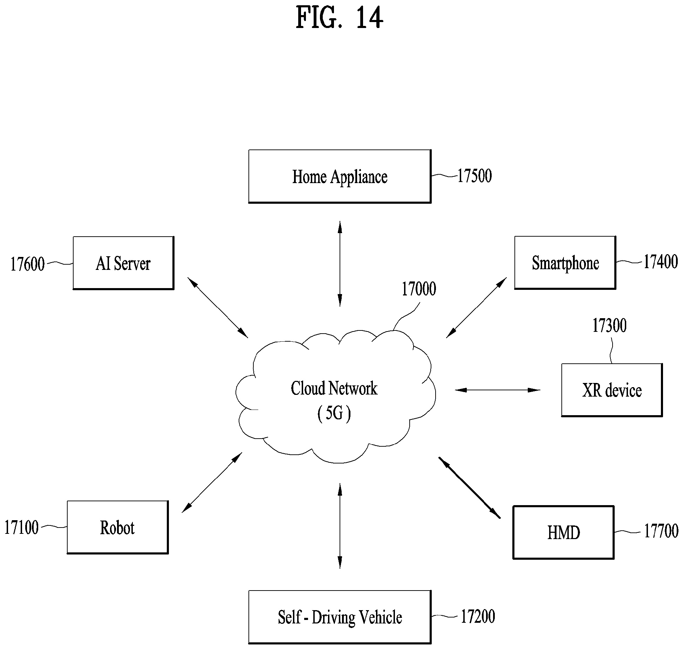

FIG. 14 shows an exemplary structure operatively connectable with a method/device for transmitting and receiving point cloud data according to embodiments.

The structure of FIG. 14 represents a configuration in which at least one of a server 17600, a robot 17100, a self-driving vehicle 17200, an XR device 17300, a smartphone 17400, a home appliance 17500, and/or a head-mount display (HMD) 17700 is connected to a cloud network 17100. The robot 17100, the self-driving vehicle 17200, the XR device 17300, the smartphone 17400, or the home appliance 17500 is referred to as a device. In addition, the XR device 17300 may correspond to a point cloud compressed data (PCC) device according to embodiments or may be operatively connected to the PCC device.

The cloud network 17000 may represent a network that constitutes part of the cloud computing infrastructure or is present in the cloud computing infrastructure. Here, the cloud network 17000 may be configured using a 3G network, 4G or Long Term Evolution (LTE) network, or a 5G network.

The server 17600 may be connected to at least one of the robot 17100, the self-driving vehicle 17200, the XR device 17300, the smartphone 17400, the home appliance 17500, and/or the HMD 17700 over the cloud network 17000 and may assist in at least a part of the processing of the connected devices 17100 to 17700.

The HMD 17700 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 17100 to 17500 to which the above-described technology is applied will be described. The devices 17100 to 17500 illustrated in FIG. 14 may be operatively connected/coupled to a point cloud data transmission device and reception according to the above-described embodiments.

<PCC+XR>

The XR/PCC device 17300 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 17300 may analyze 3D point cloud data or image data acquired through various sensors or from an external device and generate position data and attribute data about 3D points. Thereby, the XR/PCC device 17300 may acquire information about the surrounding space or a real object, and render and output an XR object. For example, the XR/PCC device 17300 may match an XR object including auxiliary information about a recognized object with the recognized object and output the matched XR object.

<PCC+Self driving+XR>

The self-driving vehicle 17200 may be implemented as a mobile robot, a vehicle, an unmanned aerial vehicle, or the like by applying the PCC technology and the XR technology.

The self-driving vehicle 17200 to which the XR/PCC technology is applied may represent a self-driving vehicle provided with means for providing an XR image, or a self-driving vehicle that is a target of control/interaction in the XR image. In particular, the self-driving vehicle 17200 which is a target of control/interaction in the XR image may be distinguished from the XR device 17300 and may be operatively connected thereto.

The self-driving vehicle 17200 having means for providing an XR/PCC image may acquire sensor information from sensors including a camera, and output the generated XR/PCC image based on the acquired sensor information. For example, the self-driving vehicle 17200 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 17200 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described above, the point cloud (or point cloud data) may include a set of points, and each point may have geometry information and attribute information. The geometry information is 3D position (XYZ) information, and the attribute information is color (RGB, YUV, and the like) and/or a reflection value. In the present disclosure, the geometry information has the same meaning as geometry data and geometry, and is used interchangeably. The attribute information has the same meaning as attribute data and attributes, and are used interchangeably.

The G-PCC encoding process performed in the transmission device and method according to embodiments may include dividing point cloud into tiles according to region and dividing each tile into slices for parallel processing. The process may include compressing the geometry in each slice unit and compressing the attribute information based on reconstructed geometry (decoded geometry) with geometry (i.e., position) information, a position of which is changed through compression.

The G-PCC decoding process performed in the receiving device and method according to embodiments may include receiving an encoded slice-unit geometry bitstream and an attribute bitstream from a transmitting side and decoding the geometry information based on the reconstructed geometry through the decoding process.

According to embodiments, an octree-based geometry compression method, a predictive tree-based geometry compression method, or a trisoup-based geometry compression method may be used to compress geometry information.

Furthermore, as described above, the point cloud content providing system may use one or more cameras (e.g., an infrared camera capable of securing depth information, an RGB camera capable of extracting color information corresponding to the depth information, etc.), a projector (e.g., an infrared pattern projector configured to secure depth information, etc.), LiDAR, and the like to generate point cloud content (or point cloud data).

LiDAR refers to equipment configured to measure the distance by measuring the time it takes for the irradiated light to reflect off a subject and return. It provides precise three-dimensional information about the real world as point cloud data over a wide area and long distance. Such large-volume point cloud data may be widely used in various fields where computer vision technology is employed, such as autonomous vehicles, robots, and 3D map production. That is, the LiDAR equipment uses a radar system configured to measure the coordinates of a position of a reflector by emitting a laser pulse and measuring the time it takes for the laser pulse to reflect on a subject (i.e., a reflector) in order to generate point cloud content. According to embodiments, the depth information may be extracted through the LiDAR equipment. The point cloud content generated through the LiDAR equipment may be composed of multiple frames, and the multiple frames may be integrated into one piece of content.

The LiDAR includes N lasers (N=16, 32, 64, etc.) in different elevations $\theta(i)i=1,...,N$, and the lasers may capture point cloud data while spinning along azimuth $\varphi$ based on the Z axis. This type is referred to as a spinning LiDAR model, and the point cloud content captured and generated by the spinning LiDAR model has angular characteristics.

There may be a scenario that requires low-latency coding from among point cloud content. In particular, an example of a point cloud service that requires low latency is a case in which point cloud data needs to captured, compressed, and transmitted in real time through LiDAR equipment. Real-time navigation, which requires receiving and processing 3D map point cloud data in real time, is also a point cloud service that requires low latency.

As a key function to improve a method of an encoder and a decoder for such low-latency services, a function that allows a transmitter to first start compressing a portion point cloud data may be required.

According to embodiments, an octree-based geometry compression method, which is one of the geometry information compression methods, scans and codes points in a breadth-first method. In contrast, the prediction tree-based geometry compression method targeting low-latency geometry compression reduces step-by-step point scanning as much as possible using a depth-first method, generates a prediction value through geometry information between tree parent and child nodes, and configures a geometry bitstream via entropy coding of a residual value.

In this case, the depth-first method has an advantage of being able to geometry code progressively captured point cloud data without having to wait for all data to be captured because progressive scanning of all points is not required. However, a prediction tree-based geometry compression scheme includes only intra prediction, and thus extension to inter prediction may be necessary. Inter prediction may reduce a size of a bitstream by removing duplicated information through a correlation between frames.

According to the present disclosure, inter prediction compression technology through reference frames for point clouds captured with LiDAR and having multiple frames may be supported. In other words, a compression rate of point cloud data may be increased by removing duplicated information between the reference frame and the current frame.

In particular, according to the present disclosure, compression efficiency may be increased when geometry information based on prediction tree is compressed by applying inter-prediction to the prediction tree-based geometry compression process to support low-latency geometry compression.

A point cloud data transmission method/device that performs compression of geometry information based on a prediction tree according to embodiments may be referred to as method/device according to embodiments. A point cloud data reception method/device that performs restoration of geometry information based on a prediction tree according to embodiments may be referred to as method/device according to embodiments.

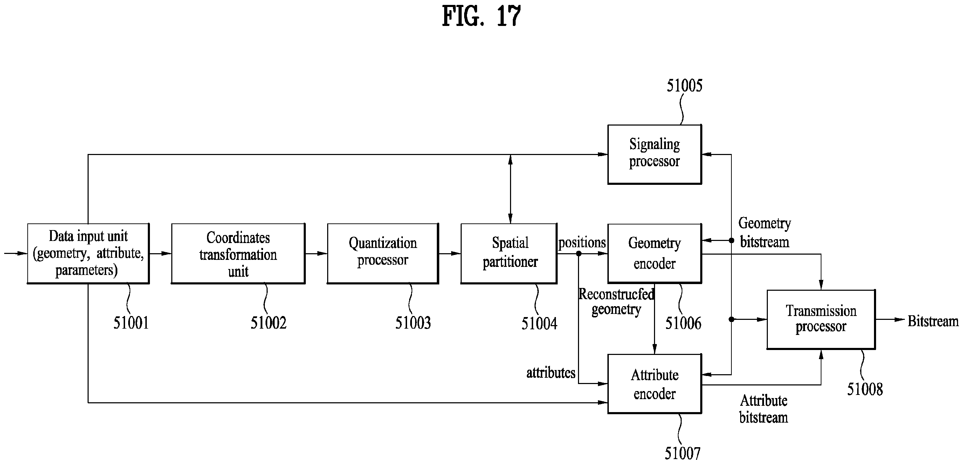

The point cloud data transmission method/device according to embodiments may be interpreted as a term referring to the transmission device 10000, the point cloud video encoder 10002, and the transmitter 10003 of FIG. 1, and the acquisition-encoding-transmission 20000-20001-20002 of FIG. 2, the point cloud video encoder of FIG. 4, the transmission device of FIG. 12, the device of FIG. 14, and the transmission device of FIG. 17.

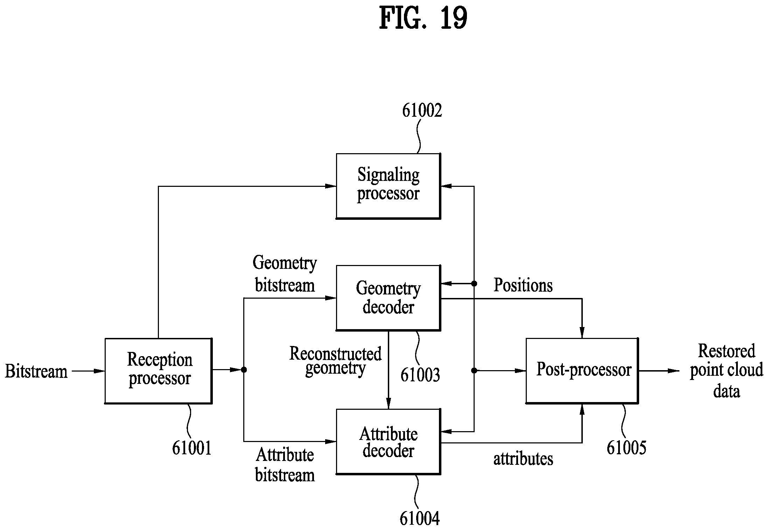

The point cloud data reception method/device according to embodiments may be interpreted as a term referring to the reception device 10000, the receiver 10005, and the point cloud video decoder 10006 of FIG. 1, and the acquisition-decoding-rendering 20002-20003-20004 of FIG. 2, the decoder of FIG. 10, the point cloud video decoder of FIG. 10, the point cloud video decoder of FIG. 11, the reception device of FIG. 13, the device of FIG. 14, and the reception device of FIG. 19.

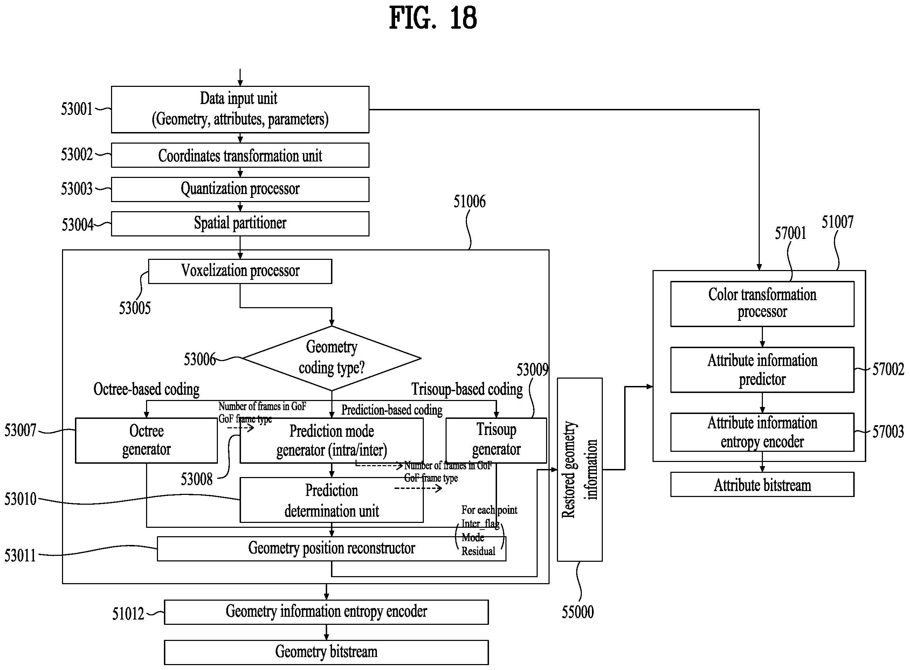

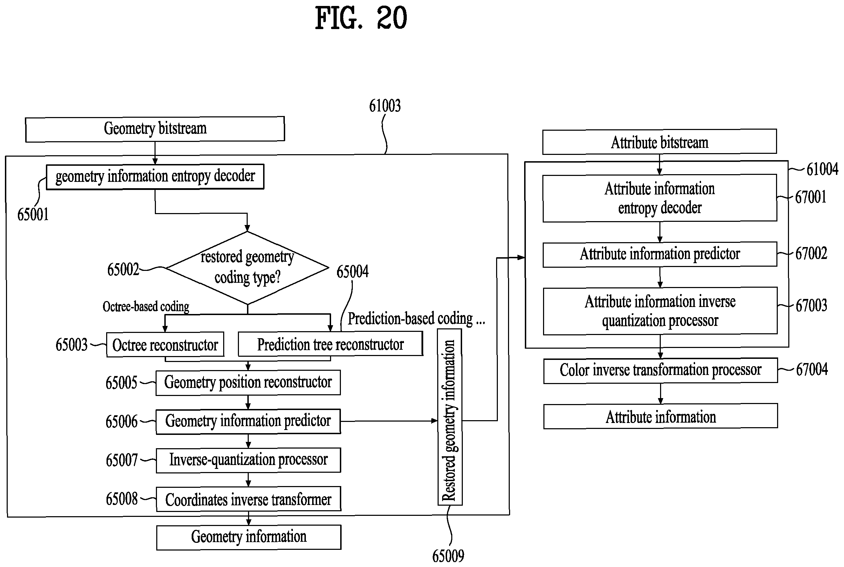

According to embodiments, the encoding process of point cloud data may be performed by the point cloud video encoder 10002 of FIG. 1, the encoding 20001 of FIG. 2, the point cloud video encoder of FIG. 4, and the point cloud video encoder of FIG. 12, the geometry encoder 51003 of FIG. 17, and the geometry encoder of FIG. 18. The decoding process of point cloud data according to embodiments may be performed by the point cloud video decoder 10006 of FIG. 1, the decoding 20003 of FIG. 2, the point cloud video decoder of FIG. 11, the point cloud video decoder of FIG. 13, the geometry decoder 61003 of FIG. 19, and the geometry decoder of FIG. 20. A detailed description of FIGS. 17 to 20 will be given below.

In some embodiments, geometry data, geometry information, location information, geometry, and the like that constitute point cloud data are interpreted to have the same meaning. The attribute data, attribute information, and attributes that constitute the point cloud data are interpreted to have the same meaning.

The following describes a method for increasing compression efficiency by applying inter prediction when compressing geometry information based on prediction among point cloud compression methods.

Alignment Method

The prediction tree-based geometry compression method according to embodiments may include an alignment process. According to an embodiment, points in point cloud data may be aligned by azimuth → radius → elevation or laser ID. That is, points may be aligned in azimuth order, when the points have the same azimuth, the points may be aligned in radius order, and when the radii are the same, the radii may be aligned in elevation order. Various combinations of alignment methods may be possible. For example, alignment may be performed as radius → azimuth → elevation or elevation → radius → azimuth.

Intra prediction tree generation method

According to the present disclosure, a prediction tree may be generated based on the points aligned as above. In this case, a first point may be a root node of the prediction tree, and for subsequent points, the node closest to the tree may be set as the parent node. Each node may have one or more child nodes. The number of child nodes may be limited to the maximum number of child nodes (e.g., 3) or may be unlimited. According to the present disclosure, through this process, a prediction tree for the current frame may be generated.

In other words, prediction-based geometry information compression is performed by defining a prediction structure for point cloud data. This structure is expressed as a prediction tree with a vertex associated with each point of the point cloud data. The prediction tree may include a root vertex (referred to as a root point or root node) and a leaf vertex (referred to as leaf point or leaf node), and points below the root point may have at least one or more children, and a depth increases in a direction of a leaf point.

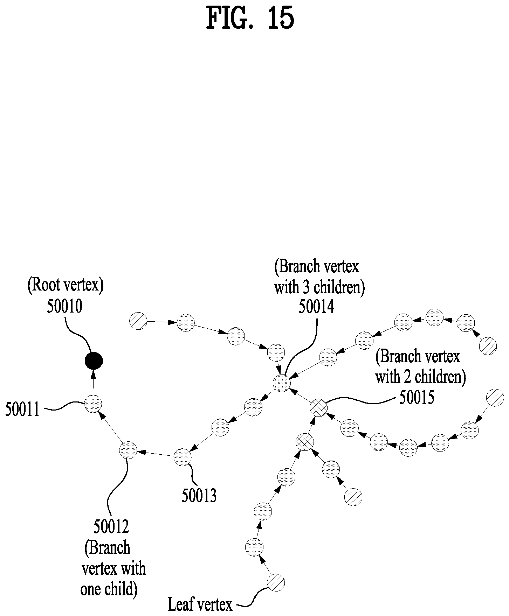

FIG. 15 is a diagram illustrating an example of a predictive tree structure according to embodiments.

That is, a final predictive tree may be a process of defining a point to be compressed (as in FIG. 15, a specific point among point cloud sets having relationships such as a parent, a grandparent, and a great-grandparent) as a child and a point to be predicted as a parent and searching for a parent-child relationship and may be constructed as a series of parents and children. For example, if it is assumed that a point 50013 is a point to be compressed, a point 50012 becomes a parent, a point 50011 becomes a grandparent, and a point 50010 becomes a great-grandparent.

According to embodiments, when constructing the predictive tree, a point at which compression starts for the first time is configured as a root vertex (or root node). The point 50011 becomes a child having the root vertex (i.e., the root point) 50010 as a parent. According to embodiments, it may be assumed that the point 50011 has the highest similarity to the root point 50010 based on geometry. According to embodiments, the predictive tree may have a point (or vertex) having a plurality of children. According to embodiments, the number of children may be limited to a certain number (e.g., 3) or may be unlimited. For example, as illustrated, a point (or vertex) 50014 has three children and a point (or vertex) 50015 has two children.

According to embodiments, when a prediction tree is generated as shown in FIG. 15, each point may be predicted by applying one of four intra prediction modes (e.g., intra prediction mode 0 to intra prediction mode 3) based on point positions of a parent, a grand-parent, and a grand-grandparent of the corresponding point.

According to embodiments, intra prediction mode 0 is a mode in which prediction is not performed and is referred to as no prediction. That is, when the intra prediction mode 0 is selected, a position value (i.e., coordinate value) of the current point is transmitted as is without compression.

Intra prediction mode 1 is a mode in which a position value (i.e., coordinate value) of a parent node (or parent point, p0) of the current point is set to a predicted value and is referred to as delta prediction. When a prediction value of the intra prediction mode 1 is subtracted from the position value of the current point, a residual value (or residual position value) of the intra prediction mode 1 is obtained.

Intra prediction mode 2 is a mode in which a value (=2p0-p1) obtained by subtracting a position value of a grand-parent node (or grand-parent point, p1) of the current point from a value obtained by multiplying a position value of a parent node (or parent point, p0) of the current by 2 is set to a prediction value and is referred to as linear prediction. When a prediction value of the intra prediction mode 2 is subtracted from the position value of the current point, a residual value (or residual position value) of the intra prediction mode 2 is obtained.

Intra prediction mode 3 is a mode in which a value (=p0+p1-p2) obtained by subtracting a position value of a grand-grandparent node (or grand-grandparent point, p2) from a value obtained by adding a position value of a parent node (or parent point, p0) and a position value of a grand-parent node (grand-parent, p1) is set to a prediction value and is referred to as parallelogram prediction. When a prediction value of the intra prediction mode 3 is subtracted from the position value of the current point, a residual value (or residual position value) of the intra prediction mode 3 is obtained.

That is, each point may be predicted by applying one of various intra prediction modes (e.g., intra prediction mode 0 to intra prediction mode 3) based on point positions of parents, grand-parents, grand-grandparent, and the like of the corresponding point.

Inter prediction of geometry data will be described below.

Method of generating matching point list for inter prediction

As described above, the point cloud content generated through a LiDAR device may include multiple frames, and the multiple frames may be integrated into one content.

In this case, the multiple frames may constitute Group of Frames (GoF). In other words, the GoF may be referred to as a set of frames that are a unit of inter-based (or inter-frame or inter-screen) encoding/decoding.

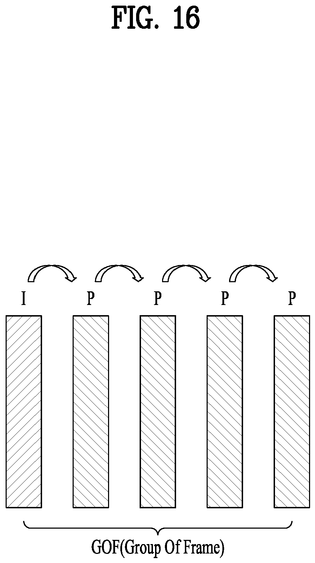

FIG. 16 is a diagram showing an example of a GOF including a plurality of frames according to embodiments.

In FIG. 16, the GoF has an IPPP structure. This is an example, and the GoF may have a structure such as IPPBPP or IBBPBB.

Here, I frame may be an intra prediction frame for determining and predicting similarity within one frame, and is also referred to as a key frame. The I frame may be determined for every $k^{th}$ frame among multiple frames, or a correlation between frames may be scored and the I frame may be determined to a frame with a highest score. P frame is a frame for inter prediction that predicts based on a relationship (i.e., one direction) between previous frames. B frame is a frame for inter prediction that predicts based on a relationship (i.e., both directions) between a previous frame and a subsequent frame. According to embodiments, when inter prediction is performed from a frame belonging to a GoF to the P frame, this may be applied to prediction with reference to a previous frame or B frames. That is, the P frame may include one or more previous frames as reference frames, and the B frame may include one or more previous frames and one or more subsequent frame as reference frames. Here, the reference frame may be a frame related to encoding/decoding of the current frame. That is, the immediately previous I frame or P frame referenced for encoding/decoding the current P frame may be a reference frame. The immediately previous I frame or P frame and the immediately subsequent I frame or P frame in both directions, which are referenced for encoding/decoding the current B frame, may be a reference frame.

The number of configured frames varies depending on the number of GoFs, and when prediction is completed for a GoF period, prediction is configured to start again from the I frame without referring to the previous frame. That is, the GoF may be encoded/decoded in the form of IPPP, IPPBPP, IBBPBB, or the like depending on a definition method.

According to embodiments, in a prediction tree-based geometry compression method, the current frame may be referenced up to four reference frames. A matching point list of points to which points belonging to the current frame and the reference frame are to be matched may be generated as follows. For example, the current frame and the reference frame may match points with the closest azimuth/radius/elevation (or laser ID) to points for inter prediction.

(Pn in Fn, Pn' in Fn-1, Pn" in Fn-2, Pn‴ in Fn-3)

For convenience of description, in the above mapping point list, Pn is assumed to be a point to be encoded in the current frame (Pn in Fn), Pn' is assumed to be a point of a first reference frame (Pn' in Fn-1), Pn" is assumed to be a point of a second reference frame (Pn" in Fn-2), and Pn‴ is assumed to be a point of a third reference frame (Pn‴ in Fn-3).

That is, the point Pn' in the first reference frame Fn-1, the point Pn" in the second reference frame Fn-2, and the point Pn‴ in the third reference frame Fn-3 may be points in a reference frame with the closest azimuth/radius/elevation (or laser ID) to the point Pn in the current frame (Fn, P frame).

According to embodiments, when there is no frame in the same GoF, a matching point list may be generated only up to the existing frame. For example, the I frame is an $n^{th}$ frame, a subsequent frame is an $(n+1)^{th}$ frame, and when an $(n+1)^{th}$ frame is the P frame, the $(n+1)^{th}$ frame may have only one reference frame.

As such, in the present disclosure, a matching point list of points to which points belonging to the current frame and the reference frames are to be matched may be generated. In other words, the matching point list includes point information. Here, the point information may be Pn, Pn", Pn‴ (position, attribute), or may be index information (n, n", n‴, ...) of the matched point.

Inter prediction method

When the matching point list is generated as described above, the transmitting device and method according to embodiments may perform inter prediction based on the generated matching point list. Based on the matching point list, points in one or more reference frames that match a point to be encoded (i.e., the current point) of the current frame may be known. In other words, the mode may be obtained based on the matching point list.

In this case, the inter prediction method may vary depending on a GoF structure as follows.

Hereinafter, an inter prediction method of an IPPP structure, an inter prediction method of an IPPBPP structure, and an inter prediction method of an IBBPBB structure will be described. The above GoF structures are embodiments to aid understanding of those skilled in the art, and the inter prediction method and/or mode determination method may be applied in the same or similar manner to other GoF structures not disclosed above.

Inter prediction method of IPPP structure

In the case of IPPP, up to three previous frames in frame Fn (current frame, P frame) may be used as reference frames. That is, Fn-3, Fn-2, and Fn-1 may be set as reference frames and inter prediction may be performed using the following method. Here, frames Fn-3, Fn-2, and Fn-1 may be I, P, and P frames preceding the current frame Fn, respectively.

In this case, Fn-3, Fn-2, and Fn-1 may be an order of the previous frames. For example, Fn-1 may be the frame immediately before the current frame, Fn-2 may be the next previous frame, and Fn-3 may be the next previous frame. Here, n may be considered as an index of a frame. The geometry encoder according to embodiments finds a matching point in each frame that can be used as a reference point for the point in the current frame based on the point (or radius, altitude, or radar ID) closest to the azimuth of the point of the current frame in each frame and registers the matching point in the matching point list.

Calculation formula for predicted position value for Mode=0: Pn' in Fn-1
Calculation formula for predicted position value for Mode=1: Pn'in Fn-1 + (Pn' in Fn-1 - Pn" in Fn-2)
Calculation formula for predicted position value for Mode=2: Pn' in Fn-1 + (Pn" in Fn-2 - Pn‴ in Fn-3)

In the above, in an embodiment, Pn' in Fn-1, Pn" in Fn-2, and Pn‴ in Fn-3 are points or point information included in a mapping point list.

In the IPPP structure, mode 0 (Mode = 0) is a mode in which a position value (i.e., coordinate value) of the matching point (Pn' in Fn-1) of the previous frame (i.e., the point of the previous frame in the matching point list) is set as a predicted value of the current point (i.e., the point to be encoded in the current frame) and will be referred to as inter prediction mode 0. When a prediction value of the inter prediction mode 0 is subtracted from the position value of the current point, a residual value (or residual position value) of the inter prediction mode 0 is obtained.

Mode 1 (Mode=1) is a mode in which a value obtained by adding a position value of a point (Pn' in Fn-1) of the first reference frame to a value obtained by subtracting a position value of a point (Pn" in Fn-2) of the second reference frame from the position value of the point (Pn' in Fn-1) of the first reference frame is set to the predicted value of the current point and will be referred to as inter prediction mode 1. In this case, a value obtained by subtracting a position value of a point (Pn" in Fn-2) of the second reference frame from a position value of a point (Pn' in Fn-1) of the first reference frame may be referred to as a vector difference value, a moving vector value, a motion difference value, or a position difference value of a matching point between two frames. In other words, how a point moves based on this value. When a prediction value of the inter prediction mode 1 is subtracted from the position value of the current point, a residual value (or residual position value) of the inter prediction mode 1 is obtained.

Mode 2 (Mode=2) is a mode in which a value obtained by adding a position value of a point (Pn' in Fn-1) of the first reference frame to a value obtained by subtracting a position value of a point (Pn‴ in Fn-3) of the third reference frame from the position value of the point (Pn" in Fn-2) of the second reference frame is set to the predicted value of the current point and will be referred to as inter prediction mode 2. In this case, a value obtained by subtracting a position value of a point (Pn‴ in Fn-3) of the third reference frame from a position value of a point (Pn" in Fn-2) of the second reference frame may be referred to as a vector difference value, a moving vector value, a motion difference value, or a position difference value of a matching point between two frames. In other words, how a point moves based on this value. When a prediction value of the inter prediction mode 2 is subtracted from the position value of the current point, a residual value (or residual position value) of the inter prediction mode 2 is obtained.

Here, the prediction value may be referred to as a predicted value or predicted position value of the current point location.

Inter prediction method of IPPBPP structure

In the case of IPPBPP, up to four previous frames in frame Fn (current frame, P frame) may be used as reference frames. That is, frames Fn-2 and Fn-1 may be set as reference frames, the subsequent frame B may be set as a reference frame, and inter prediction may be performed in the following method.

Calculation formula for predicted position value for Mode=0: Pn' in Fn-1
Calculation formula for predicted position value for Mode=1: Pn'in Fn-1 + (Pn' in Fn-1 - Pn" in Fn-2)
Calculation formula for predicted position value for Mode=2: Pn' in Fn-1 + (Pn" in Fn-2 - Pn''' in Fn-3)
Calculation formula for predicted position value for Mode=3: Pn' in Fn-1 + (P in B - Pn' in Fn-1)/(the number of P frames between current frame and B frame +1)

In the above, in an embodiment, Pn' in Fn-1, Pn" in Fn-2, Pn''' in Fn-3, P in B are points or point information included in a mapping point list.

In the IPPBPP structure, mode 0 (Mode = 0) to mode 2 (Mode = 2) are the same as the above-described IPPP structure, and thus a detailed description is omitted here to avoid repetitions.

Mode 3 (Mode=3) is a mode in which a value obtained by adding a position value of a point (Pn' in Fn-1) of the first reference frame to a resulting value obtained by subtracting a position value of a point (Pn' in Fn-1) of the first reference frame from a position value of a point (P in B) of B frame (i.e., reference frame) is divided by a value obtained by adding 1 to the number of P frames between the current frame and B frame is set to a prediction value of the current point and will be referred to as inter prediction mode 3. In this case, a value obtained by subtracting a position value of a point (Pn' in Fn-1) of the first reference frame from a position value of a point (P in B) of B frame may be referred to as a vector difference value, a moving vector value, a motion difference value, or a position difference value of a matching point between two frames. In other words, how a point moves based on this value. A degree by which a point moves in each frame may be predicted by dividing this value by a value obtained by adding 1 to the number of P frames present between the current frame and B frame. When a prediction value of the inter prediction mode 3 is subtracted from the position value of the current point, a residual value (or residual position value) of the inter prediction mode 3 is obtained.

For example, when the last P4 frame in the IP1P2BP3P4 structure is the current frame, the number of P frames existing between the current frame and B frame is 3. This is because the structure is predicted based on accumulation of P1, P2, and P3. The matching point list is a structure that considers all previous reference frames. As another example, in the IP1P2BP3P4 structure, the B frame is transmitted before the P2 frame even when the P2 frame is the current frame, and in this case, mode 3 is also possible. Prediction may be made using only I frame as B frame in the IP1P2BP3P4 structure.

Inter prediction method of IBBPBB structure

In the case of IBBPBB, up to four previous frames in frame Fn (current frame, P frame) may be used as reference frames. That is, frames Fn-2 and Fn-1 may be set as reference frames, the subsequent frame B may be set as a reference frame, and inter prediction may be performed in the following method. Here, frame Fn-2 and Fn-1 may be B frames preceding the current frame Fn. The frame Fn-2 and Fn-1 may be subsequent B frames.

Calculation formula for predicted position value for Mode=0: Pn' in Fn-1
Calculation formula for predicted position value for Mode=1: Pn'in Fn-1 + (Pn' in Fn-1 - Pn" in Fn-2)
Calculation formula for predicted position value for Mode=2: Pn' in Fn-1 + (Pn" in Fn-2 - Pn''' in Fn-3)
Calculation formula for predicted position value for Mode=3: Pn' in Fn-1 + (P in B - Pn' in Fn-1)/(the number of P frames between current frame and B frame +1)

In the above, in an embodiment, Pn' in Fn-1, Pn" in Fn-2, Pn''' in Fn-3, P in B are points included in a mapping point list.

In the IBBPBB structure, mode 0 (Mode = 0) to mode 3 (Mode = 3) are the same as the above-described IPPBPP structure, and thus a detailed description is omitted here to avoid repetitions. That is, the IBBPBB structure and the IPPBPP structure may different in a value obtained by adding 1 to the number of P frames present between the current frame and the B frame.

Thus far, a method of obtaining a prediction value for each mode in the IPPP structure, the IPPBPP structure, and the IBBPBB structure has been described. According to the present disclosure, a prediction value for each mode may be obtained by applying the above methods even if a GoF structure is different. When there is no B frame as a reference frame, the prediction value of the current point may be obtained based on inter prediction mode 0 to inter prediction mode 2 above, and when B frame is provided as a reference frame, the prediction value of the current point may be obtained based on inter prediction mode 0 to inter prediction mode 3. In this case, the number of P frames between the selected reference frame, the current frame, and the B frame may vary.

Prediction mode through Rate-Distortion Optimization (RDO) and inter_flag selection method

The best prediction mode (i.e., the optimal prediction mode) may be selected by performing RDO on a residual of a predicted position value of up to four inter prediction modes (i.e., inter prediction mode 0 to inter prediction mode 3) and a position value of the current point in the aforementioned four intra prediction modes (i.e., intra prediction mode 0 to intra prediction mode 3) and the matching point list configured inter prediction. For example, from among four intra prediction modes and four inter prediction modes, a prediction mode in which a value closest to the current point (e.g., a value with the smallest residual and number of bits) may be selected as a prediction mode for the current point. In this case, when the selected prediction mode is one of inter prediction mode 0 to inter prediction mode 3, inter_flag may be set to True, and the selected prediction mode (i.e., prediction mode in inter) and inter_flag may be signaled. When the selected prediction mode is one of intra prediction mode 0 to intra prediction mode 3, inter _flag may be set to False, and the selected prediction mode (i.e., prediction mode in intra) and inter _flag may be signaled. The residual value of the predicted position value and the current point position value may be signaled.

According to embodiments, prediction mode information and inter _flag information of the corresponding point selected based on an RDO value are transmitted to the reception device through signaling. According to embodiments, prediction-related option information may include prediction mode information and inter _flag information.

As such, prediction tree-based geometry coding performs prediction on point cloud data based on neighboring point information or point information of a previous frame. The prediction tree-based geometry coding may not perform progressive scanning of all points, and thus there is no need to wait for all point cloud data to be captured, and the point cloud data captured progressively may be encoded, and accordingly, this is suitable for point cloud data content that requires delayed processing. In other words, prediction tree-based geometry compression is more effective for real-time processing and low latency compared to octree-based geometry compression.

Point restoration plan

Hereinafter, a method of restoring a point in a geometry decoder of a reception device will be described.

When the received inter_flag is True, reference frames are configured according to the received prediction mode (i.e., one of inter prediction mode 0 to inter prediction mode 3), a position value of the current point may be predicted according to the received prediction mode after a matching point list is generated, and the position of the current point may be restored by adding the predicted position value and the received residual value. The description of each mode below has been explained in the IPPP structure, the IPPBPP structure, and the IBBPBB structure above, and thus is omitted here.

Calculation formula for predicted position value for Mode=0: Pn' in Fn-1
Calculation formula for predicted position value for Mode=1: Pn'in Fn-1 + (Pn' in Fn-1 - Pn" in Fn-2)
Calculation formula for predicted position value for Mode=2: Pn' in Fn-1 + (Pn" in Fn-2 - Pn''' in Fn-3)
Calculation formula for predicted position value for Mode=3: Pn' in Fn-1 + (P in B - Pn' in Fn-1)/(the number of P frames between current frame and B frame +1)

FIG. 17 is a diagram illustrating another example of a point cloud transmission device according to embodiments.

The point cloud transmission device according to the embodiments may include a data input unit 51001, a coordinates transformation unit 51002, a quantization processor 51003, a spatial partitioner 51004, a signaling processor 51005, a geometry encoder 51006, an attribute encoder 51007, and a transmission processor 51008. According to embodiments, the coordinates transformation unit 51002, the quantization processor 51003, the spatial partitioner 51004, the geometry encoder 51006, and the attribute encoder 51007 may be referred to as point cloud video encoders.

The point cloud data transmission device of FIG. 17 may correspond to the transmission device 10000 of FIG. 1, the point cloud video encoder 10002 of FIG. 1, the transmitter 10003 of FIG. 1, the acquisition 20000/encoding 20001/transmission 20002 of FIG. 2, the point cloud video encoder of FIG. 4, the transmission device of FIG. 12, the device of FIG. 14, and the like. Each component in FIG. 17 and the corresponding figures may correspond to software, hardware, a processor connected to a memory, and/or a combination thereof.

The data input unit 51001 may perform some or all of the operations of the point cloud video acquisition unit 10001 of FIG. 1, or may perform some or all of the operations of the data input unit 12000 of FIG. 12. The coordinates transformation unit 51002 may perform some or all of the operations of the coordinates transformation unit 40000 of FIG. 4. Further, the quantization processor 51003 may perform some or all of the operations of the quantization unit 40001 of FIG. 4, or may perform some or all of the operations of the quantization processor 12001 of FIG. 12. That is, the data input unit 51001 may receive data to encode the point cloud data. The data may include geometry data (which may be referred to as geometry, geometry information, etc.), attribute data (which may be referred to as an attribute, attribute information, etc.), and parameter information indicating coding-related settings. the present disclosure describes, as an example, acquiring point cloud data using a LIDAR device in the data input unit 51001.

The coordinates transformation unit 51002 may support coordinate transformation of point cloud data, such as changing the xyz axes or transforming the data from the xyz Cartesian coordinate system to a spherical coordinate system.

The quantization processor 51003 may quantize the point cloud data. For example, it may adjust the scale by multiplying the x, y, and z values of the position of the point cloud data by the scale according to the scale (scale=geometry quantization value) setting. The scale value may follow the set value or be included in the bitstream as parameter information and delivered to the receiver.

The spatial partitioner 51004 may spatially partition the point cloud data quantized and output by the quantization processor 51003 into one or more 3D blocks based on a bounding box and/or a sub-bounding box. For example, the spatial partitioner 51004 may partition the quantized point cloud data into tiles or slices for region-by-region access or parallel processing of content. In one embodiment, the signaling information for spatial partition is entropy-encoded by the signaling processor 51005 and then transmitted through the transmission processor 51008 in the form of a bitstream.

In one embodiment, the point cloud content may be one person such as an actor, multiple people, one object, or multiple objects. In a larger range, it may be a map for autonomous driving or a map for indoor navigation of a robot. In this case, the point cloud content may be a vast amount of locally connected data. In this case, the point cloud content cannot be encoded/decoded at once, and accordingly tile partitioning may be performed before the point cloud content is compressed. For example, room #101 in a building may be partitioned into one tile and room #102 in the building may be partitioned into another tile. In order to support fast encoding/decoding by applying parallelization to the partitioned tiles, the tiles may be partitioned (or split) into slices again. This operation may be referred to as slice partitioning (or splitting).

That is, a tile may represent a partial region (e.g., a rectangular cube) of a 3D space occupied by point cloud data according to embodiments. According to embodiments, a tile may include one or more slices. The tile according to the embodiments may be partitioned into one or more slices, and thus the point cloud video encoder may encode point cloud data in parallel.

A slice may represent a unit of data (or bitstream) that may be independently encoded by the point cloud video encoder according to the embodiments and/or a unit of data (or bitstream) that may be independently decoded by the point cloud video decoder. A slice may be a set of data in a 3D space occupied by point cloud data, or a set of some data among the point cloud data. A slice according to the embodiments may represent a region or set of points included in a tile according to embodiments. According to embodiments, a tile may be partitioned into one or more slices based on the number of points included in one tile. For example, one tile may be a set of points partitioned by the number of points. According to embodiments, a tile may be partitioned into one or more slices based on the number of points, and some data may be split or merged in the partitioning process. That is, a slice may be a unit that may be independently coded within a corresponding tile. In this way, a tile obtained by spatially partitioning may be partitioned into one or more slices for fast and efficient processing.

The point cloud video encoder according to the embodiments may encode point cloud data on a slice-by-slice basis or a tile-by-tile basis, wherein a tile includes one or more slices. In addition, the point cloud video encoder according to the embodiments may perform different quantization and/or transformation for each tile or each slice.

Positions of one or more 3D blocks (e.g., slices) spatially partitioned by the spatial partitioner 51004 are output to the geometry encoder 51006, and the attribute information (or attributes) is output to the attribute encoder 51007. The positions may be position information about the points included in a partitioned unit (box, block, tile, tile group, or slice), and are referred to as geometry information.

The geometry encoder 51006 outputs a geometry bitstream by performing inter prediction or intra prediction-based encoding in at least one unit of frame/tile/slice/block as described above with respect to the positions of the points output from the spatial partitioner 51004. The used prediction mode information and inter_flag information are output to the transmission processor along with the residual information of the current point. The geometry encoder 51006 may reconstruct the encoded geometry information and output the geometry information to the attribute encoder 51007.

The attribute encoder 51007 may output an attribute bitstream by encoding (i.e., compressing) the attributes (e.g., partitioned attribute original data) output from the spatial partitioner 51004 based on the reconstructed geometry output from the geometry encoder 51006.

FIG. 18 is a diagram showing an example of an operation of the geometry encoder 51006 and the attribute encoder 51007 according to embodiments.

In FIG. 18, a data input unit 53001, a coordinates transformation unit 53002, a quantization processor 53003, and a spatial partitioner 53004 are blocks that perform the same operations of the data input unit 51001, the coordinates transformation unit 51002, the quantization processor 51003, and the spatial partitioner 51004 of FIG. 17, and thus a detailed description thereof is omitted here.

In one embodiment, a quantization processor may be further provided between the spatial partitioner 53004 and the voxelization processor 53005. The quantization processor quantizes the positions of one or more 3D blocks (e.g., slices) spatially partitioned by the spatial partitioner 53004. In this case, the quantizer may perform some or all of the operations of the quantization unit 40001 of FIG. 4, or may perform part or all of the operations of the quantization processor 12001 of FIG. 12. When the quantization processor is further provided between the spatial partitioner 53004 and the voxelization processor 53005, the quantization processor 51003 of FIG. 17 may or may not be omitted.

The voxelization processor 53005 according to embodiments performs voxelization based on positions or quantized positions of one or more spatially partitioned 3D blocks (e.g., slices). Voxelization refers to the minimum unit that expresses position information in a 3D space. That is, the voxelization processor 53005 may support a process of rounding a geometric position value of scaled points with an integer. Points of point cloud content (or 3D point cloud video) according to embodiments may be provided in one or more voxels. In some embodiments, one voxel may include one or more points. In one embodiment, when quantization is performed before voxelization, a plurality of points may belong to one voxel.

In this specification, when two or more points are included in one voxel, these two or more points are referred to as duplicated points (or overlapped points). That is, during a geometry encoding process, the duplicated points may be generated through geometry quantization and voxelization.

The voxelization processor 53005 according to embodiments may output duplicated points belonging to one voxel as is without merging the same, or may output the duplicated points by merging the same into one point.

In FIG. 18, reference numeral 53006 may be referred to as a determination unit that checks whether to encode output of the voxelization processor 53003 based on an octree, based on a prediction tree, or based on a trisoup. The determination unit 53006 may check this by using signaling information or check this based on a preset method.

When checking this by using the octree-based geometry compression method, an octree generator 53007 generates an octree based on the geometry information and compresses the geometry information based on the octree. When checking this by using the trisoup-based geometry compression method, a trisoup generator 53009 generates a trisoup based on the geometry information and compresses the geometry information based on the trisoup.

When checking this by using the prediction tree-based geometry compression method, a prediction mode generator 53008 performs prediction tree-based intra prediction or inter prediction to generate at least one of intra prediction mode 0 to intra prediction mode 3 and/or inter prediction mode 0 to inter prediction mode 3. To this end, the prediction mode generator 53008 may receive signaling information, such as information on the number of frames in the GoF or GoF frame type information. According to embodiments, inter-prediction-related option information may include information on the number of frames in the GoF and GoF frame type information.

That is, the prediction mode generator 53008 may generate a prediction tree for intra prediction. The prediction mode generator 53008 may set reference frames according to the number of frames in the GoF and the frame type in the GoF for inter prediction and generate the matching point list of between the reference frames and the current frame. A predicted position value of the current point may be calculated for each mode through the prediction tree and the matching point list. Information on the number of frames within the GoF and GoF frame type information indicating the type of frame within the GoF for identifying the number of frames within the GoF referenced by the prediction mode generator 53008 are included in signaling information as inter-prediction-related option information and transmitted to the reception device.

Here, the method of generating at least one of intra prediction mode 0 to intra prediction mode 3 and/or inter prediction mode 0 to inter prediction mode 3 by performing prediction tree-based intra prediction or inter prediction has been described in detail above, and thus is omitted here.

The predicted position value (or predicted position information) for each mode calculated by the prediction mode generator 53008 is output to a prediction determination unit 53010.

The prediction determination unit 53010 may select an optimum prediction mode by performing an RDO process based on a predicted position value calculated based on one or more of intra prediction mode 0 to intra prediction mode 3 and/or inter prediction mode 0 to inter prediction 3, that is, a prediction position value for each prediction mode of intra and inter. The best prediction mode (i.e., the optimal prediction mode) may be selected by performing RDO on a residual of a predicted position value of up to four inter prediction modes (i.e., inter prediction mode 0 to inter prediction mode 3) and a position value of the current point in the aforementioned four intra prediction modes (i.e., intra prediction mode 0 to intra prediction mode 3) and the matching point list configured inter prediction. For example, from among four intra prediction modes and four inter prediction modes, a prediction mode in which a value closest to the current point (e.g., a value with the smallest residual and number of bits) may be selected as an optimal prediction mode for the current point.

In this case, when the selected prediction mode is one of inter prediction mode 0 to inter prediction mode 3, inter_flag may be set to True, and the selected prediction mode (i.e., prediction mode in inter) and inter _flag (=True) may be signaled. When the selected prediction mode is one of intra prediction mode 0 to intra prediction mode 3, inter _flag may be set to False, and the selected optimal prediction mode (i.e., prediction mode in intra) and inter _flag (=False) may be signaled. The residual value of the predicted position value and the current point position value may be signaled. That is, inter _flag information, prediction mode information, and residual information (or residual value) for each point may be transmitted to a receiving side.

The inter_flag information is included in inter-prediction-related option information and transmitted to the reception device, and the prediction mode information and residual information (or residual value) of the corresponding point selected based on the RDO value is entropy coded to form a geometry information bitstream by the entropy encoder 53012 and then transmitted to the reception device. In this case, inter-prediction-related option information including inter_flag information may also be transmitted in the geometry information bitstream or may be included in a separate signaling information bitstream and transmitted to the reception device.

As described above, when a geometry coding type is prediction-based coding, the geometry encoder 51006 may generate prediction tree/prediction values according to intra/inter prediction mode through the prediction mode generator 53008 and select an optimal prediction mode by performing an RDO process based on the prediction tree generated through the prediction determination unit 53010. When the predicted position value is optimally selected in the inter prediction mode through RDO, inter_flag may be set to True and signaled.

The entropy encoder 53012 may configure a geometry information bitstream by entropy coding the residual value (or residual information) with a predicted value.

According to embodiments, the prediction mode generator 53008 may further perform an alignment process of a point before performing intra prediction and/or inter prediction. In one embodiment, points in point cloud data may be aligned by azimuth → radius → elevation or laser ID. That is, the points may be aligned in azimuth order, when the points have the same azimuth, the points may aligned in radius order, and when the points have the same radii, the points may be aligned in elevation order. Various combinations of alignment methods may be possible. For example, alignment may be performed as radius → azimuth → elevation or elevation → radius → azimuth, etc.

A geometry position reconstructor 53011 according to embodiments restores (or reconstructs) geometry information based on positions changed through geometry coding in the octree generator 53007, the prediction determination unit 53010, or the trisoup generator 53009 and outputs the restored geometry information (or restored geometry) to the attribute encoder 51007. That is, this is because, attribute information is dependent on geometry information (position), and thus restored (or reconstructed) geometry information is needed to compress the attribute information.

A color transformation processor 57001 of the attribute encoder 51007 corresponds to the color transformer 40006 in FIG. 4 or the color transformation processor 12008 in FIG. 12. The color transformation processor 57001 according to embodiments performs color transformation coding to transform a color value (or texture) included in attributes provided by the data input unit 53001 and/or the spatial partitioner 53004. For example, the color transformation processor 57001 may transform a format of color information (e.g., transform from RGB to YCbCr). An operation of the color transformation processor 57001 according to embodiments may be applied optionally according to color values included in the attributes. In another embodiment, the color transformation processor 57001 may perform color transformation coding based on the reconstructed geometry.

An attribute information predictor 57002 compresses attribute information by applying a predicting transform coding method, a lift transform coding method, an RAHT coding method, or the like to the output of the color transformation processor 57001.

An attribute information entropy encoder 57003 according to embodiments performs entropy encoding on the attribute information compressed by the attribute information predictor 57002 and outputs an attribute bitstream (or an attribute information bitstream).

In this specification, inter-prediction-related option information may be signaled in addition to SPS or GPS. In this specification, the inter-prediction-related option information may be signaled in the TPS or a geometry header for each slice. In this case, in one embodiment, the inter-prediction-related option information is processed in a signaling processor 61002.

As described above, the inter-prediction-related option information may include information for identifying the number of frames within the GoF (numofFramesinGOF) and information indicating a type of frame within the GoF (typeofGOF).

The inter-prediction-related option information may further include prediction mode information for each point, and/or inter flag information (inter_flag). The inter flag information (inter_flag) may indicate whether to perform restoration using a reference frame of each point. The prediction mode information for each point and/or inter flag information (inter_flag) may be signaled in geometry prediction tree data (geometry_predtree_data()). The geometry prediction tree data (geometry_predtree_data()) may be included in a geometry slice (or geometry data unit).

Information included in the inter-prediction-related option information according to the present disclosure may be added, deleted, or modified according to those skilled in the art, and thus the present disclosure is not limited to the above-described examples.

The geometry bitstream compressed and output from the geometry encoder 51006 and the attribute bitstream compressed and output from the attribute encoder 51007 are output to a transmission processor 51008.

The transmission processor 51008 according to the embodiments may perform an operation and/or transmission method identical or similar to the operation and/or transmission method of the transmission processor 12012 of FIG. 12, and perform an operation and/or transmission method identical or similar to the operation and/or transmission method of the transmitter 10003 of FIG. 1. For details, reference will be made to the description of FIG. 1 or 12.

The transmission processor 51008 according to the embodiments may transmit the geometry bitstream output from the geometry encoder 51006, the attribute bitstream output from the attribute encoder 51007, and the signaling bitstream output from the signaling processor 51005, respectively, or may multiplex the bitstreams into one bitstream to be transmitted.

The transmission processor 51008 according to the embodiments may encapsulate the bitstream into a file or segment (e.g., a streaming segment) and then transmit the encapsulated bitstream over various networks such as a broadcasting network and/or a broadband network.

The signaling processor 51005 according to the embodiments may generate and/or process signaling information and output the same to the transmission processor 51008 in the form of a bitstream. The signaling information generated and/or processed by the signaling processor 51005 will be provided to the geometry encoder 51006, the attribute encoder 51007, and/or the transmission processor 51008 for geometry encoding, attribute encoding, and transmission processing. Alternatively, the signaling processor 51005 may receive signaling information generated by the geometry encoder 51006, the attribute encoder 51007, and/or the transmission processor 51008.

In the present disclosure, the signaling information may be signaled and transmitted on a per parameter set (sequence parameter set (SPS), geometry parameter set (GPS), attribute parameter set (APS), tile parameter set (TPS), or the like) basis. Also, it may be signaled and transmitted on the basis of a coding unit of each image, such as slice or tile. In the present disclosure, signaling information may include metadata (e.g., set values) related to point cloud data, and may be provided to the geometry encoder 51006, the attribute encoder 51007, and/or the transmission processor 51008 for geometry encoding, attribute encoding, and transmission processing. Depending on the application, the signaling information may also be defined at the system side, such as a file format, dynamic adaptive streaming over HTTP (DASH), or MPEG media transport (MMT), or at the wired interface side, such as high definition multimedia interface (HDMI), Display Port, Video Electronics Standards Association (VESA), or CTA.

A method/device according to the embodiments may signal related information to add/perform an operation of the embodiments. The signaling information according to the embodiments may be used by a transmission device and/or a reception device.

In this specification, according to an embodiment, the inter-prediction-related option information to be used for compression of geometry information is signaled in at least one of a sequence parameter set, a geometry parameter set, a tile parameter set, a geometry slice header, and/or geometry prediction tree data.

FIG. 19 is a diagram showing another exemplary point cloud reception device according to embodiments.

The point cloud reception device according to the embodiments may include a reception processor 61001, a signaling processor 61002, a geometry decoder 61003, an attribute decoder 61004, and a post-processor 61005. According to embodiments, the geometry decoder 61003 and the attribute decoder 61004 may be referred to as a point cloud video decoder. According to embodiments, the point cloud video decoder may be referred to as a PCC decoder, a PCC decoding unit, a point cloud decoder, a point cloud decoding unit, or the like.

The point cloud reception device of FIG. 19 may correspond to the reception device 10004, the receiver 10005, the point cloud video decoder 10006 of FIG. 1, the transmission-decoding-rendering 20002-20003-20004 of FIG. 2, the point cloud video decoder of FIG. 11, the reception device of FIG. 13, the device of FIG. 14, or the like. Each component in FIG. 19 and the corresponding figures may correspond to software, hardware, a processor connected to a memory, and/or a combination thereof.

The reception processor 61001 according to the embodiments may receive a single bitstream, or may receive a geometry bitstream (also called geometry information bitstream), an attribute bitstream (also called attribute information bitstream), and a signaling bitstream, respectively. When a file and/or segment is received, the reception processor 61001 according to the embodiments may decapsulate the received file and/or segment and output the decapsulated file and/or segment as a bitstream.

When the single bitstream is received (or decapsulated), the reception processor 61001 according to the embodiments may demultiplex the geometry bitstream, the attribute bitstream, and/or the signaling bitstream from the single bitstream. The reception processor 61001 may output the demultiplexed signaling bitstream to the signaling processor 61002, the geometry bitstream to the geometry decoder 61003, and the attribute bitstream to the attribute decoder 61004.

When the geometry bitstream, the attribute bitstream, and/or the signaling bitstream are received (or decapsulated), respectively, the reception processor 61001 according to the embodiments may deliver the signaling bitstream to the signaling processor 61002, the geometry bitstream to the geometry decoder 61003, and the attribute bitstream to the attribute decoder 61004.

The signaling processor 61002 may parse signaling information, for example, information contained in the SPS, GPS, APS, TPS, metadata, or the like from the input signaling bitstream, process the parsed information, and provide the processed information to the geometry decoder 61003, the attribute decoder 61004, and the post-processor 61005. In another embodiment, signaling information contained in the geometry slice header and/or the attribute slice header may also be parsed by the signaling processor 61002 before decoding of the corresponding slice data. That is, when the point cloud data is partitioned into tiles and/or slices at the transmitting side, the TPS includes the number of slices included in each tile, and accordingly the point cloud video decoder according to the embodiments may check the number of slices and quickly parse the information for parallel decoding.

Accordingly, the point cloud video decoder according to the present disclosure may quickly parse a bitstream containing point cloud data as it receives an SPS having a reduced amount of data. The reception device may decode tiles upon receiving the tiles, and may decode each slice based on the GPS and APS included in each tile. Thereby, decoding efficiency may be maximized. Alternatively, the reception device may maximize decoding efficiency by intra-prediction or inter-prediction decoding the point cloud data based on inter prediction-related option information signaled in the SPS, GPS, TPS, geometry slice header and/or geometry prediction tree data.

That is, the geometry decoder 61003 may reconstruct the geometry by performing the reverse process of the operation of the geometry encoder 51006 of FIG. 17 on the compressed geometry bitstream based on signaling information (e.g., geometry related parameters). The geometry restored (or reconstructed) by the geometry decoder 61003 is provided to the attribute decoder 61004. Here, the geometry-related parameters may include inter-prediction-related option information to be used for inter-prediction reconstruction of the geometry information.

The attribute decoder 61004 may restore the attribute by performing the reverse process of the operation of the attribute encoder 51007 of FIG. 17 on the compressed attribute bitstream based on signaling information (e.g., attribute related parameters) and the reconstructed geometry. According to embodiments, when the point cloud data is partitioned into tiles and/or slices at the transmitting side, the geometry decoder 61003 and the attribute decoder 61004 perform geometry decoding and attribute decoding on a tile-by-tile basis and/or slice-by-slice basis.

FIG.20 is a diagram showing an example of an operation of the geometry decoder 61003 and the attribute decoder 61004 according to embodiments.

A geometry information entropy encoder 65001, an inverse-quantization processor 65007, and a coordinates inverse transformer 65008 included in the geometry decoder 61003 of FIG. 20 may perform some or all of the operations of the arithmetic decoder 11000 and the coordinate inverse transformer 11004 of FIG. 11 or some or all of the operations of the arithmetic decoder 13002 and the inverse quantization processor 13005 of FIG. 13. The positions restored by the geometry decoder 61003 are output to the post-processor 61005.

According to embodiments, when the inter-prediction-related option information for restoring inter prediction of geometry information is at least one of a sequence parameter set (SPS), a geometry parameter set (GPS), a tile parameter set (TPS), a geometry slice header, and/or geometry prediction tree data, the inter-prediction-related option information may be obtained by the signaling processor 61002 and provided to the geometry decoder 61003 or may be directly obtained by the geometry decoder 61003.

According to embodiments, the inter-prediction-related option information may include information for identifying the number of frames within the GoF (numofFramesinGOF) and/or information indicating a type of frame within the GoF (typeofGOF). According to embodiments, the inter-prediction-related option information may further include prediction mode information for each point, and/or inter flag information (inter_flag).

From among the inter-prediction-related option information, information for identifying the number of frames in GoF (numofFramesinGOF) and/or information indicating a type of frame in GoF (typeofGOF) are included in at least one of SPS, GPS, TPS, or geometry slice headers.

From among the inter-prediction-related option information, prediction mode information for each point and/or inter flag information (inter_flag) may be included in geometry prediction tree data (geometry_predtree_data()). The geometry prediction tree data (geometry_predtree_data()) may be included in a geometry slice (or a geometry data unit). Information included in the inter-prediction-related option information according to the present disclosure may be added, deleted, or modified according to those skilled in the art, and thus the present disclosure is not limited to the above-described examples.

That is, the geometry information entropy encoder 65001 entropy decodes the input geometry bitstream.

According to embodiments, when octree-based encoding is applied to geometry information at a transmitting side, an octree reconstructor 65003 performs octree-based restoration on the geometry information. Conversely, when prediction-based encoding is applied to the geometry information at the transmitting side, a prediction tree reconstructor 65004 performs prediction-based restoration on the geometry information.

To this end, reference numeral 65002 (or determination unit) checks whether to apply octree-based coding or prediction-based coding to the geometry information.

That is, when checking that prediction-based coding is applied to the geometry information, the determination unit 65002 the entropy-decoded geometry information to the prediction tree reconstructor 65004. Conversely, when checking that octree-based coding is applied to the geometry information, the determination unit 65002 outputs the entropy-decoded geometry information to the octree reconstructor 65003.

The prediction tree reconstructor 65004 may configure the matching point list between the prediction tree and the reference frame and decode a position value of geometry based on the number of frames in GoF, a GoF frame type, Inter_flag information for each point, prediction mode information, and residual information (or residual value), which are received and restored.

According to embodiments, when the inter _flag information is True, the prediction tree reconstructor 65004 configures reference frames according to the received prediction mode (i.e., one of inter prediction mode 0 to inter prediction mode 3), predicts a position value of the current point according to the received prediction mode after generating the matching point list, and restores a position of the current point by adding the predicted position value and the received residual value.

According to embodiments, when the inter_flag information is False, the prediction tree reconstructor 65004 configures a prediction tree according to the received prediction mode (i.e., one of inter prediction mode 0 to inter prediction mode 3), predicts a position value of the current point in the prediction tree according to the received prediction mode, and restores a position of the current point by adding the predicted position value and the received residual value.

In other words, when the signaling information indicates that intra prediction-based encoding is applied to the geometry information at the transmitting side, the prediction tree reconstructor 65004 performs intra prediction-based restoration on the geometry information. Conversely, when the signaling information indicates that inter prediction-based encoding is applied to the geometry information at the transmitting side, inter prediction-based restoration is performed on the geometry information.

The geometry information restored by the octree reconstructor 65003 or the prediction tree reconstructor 65004 is output to the geometry position reconstructor 65005 to reconstruct the position of the geometry information.

The output of the geometry position reconstructor 65005 is input to a geometry information transformation inverse quantization processor 66007 through a geometry information predictor 65006.

The process of predicting a position value of the current point according to the above prediction mode and restoring the position of the current point by adding the predicted position value and the received residual value may also be performed using the geometry information predictor 65006 instead of the prediction tree reconstructor 65004. When the position restoration process of the current point is performed in the prediction tree reconstructor 65004, the geometry information predictor 65006 may be omitted. In the present disclosure, the prediction tree reconstructor 65004, the geometry position reconstructor 65005, and the geometry information predictor 65006 are grouped and referred to as a geometry information restorer.

A geometry information inverse transformation inverse quantizer 65007 according to embodiments may perform a reverse process of the transformation performed by the geometry information transformation quantization processor 51003 of the transmitting device on the geometry information restored by the geometry information restorer and generate restored geometry information on which inverse quantization is performed by multiplying the result by a scale (=geometry quantization value). That is, the geometry information transformation inverse quantization processor 65007 applies the scale (scale=geometry quantization value) included in the signaling information to the geometry position x, y, and z values of the restored point to perform inverse quantization of the geometry information.

The coordinates inverse transformer 65008 may perform a reverse process of coordinate transformation performed by the coordinates transformation unit 51002 of the transmission device on the inverse quantized geometry information. For example, the coordinates inverse transformer 65008 may restore the xyz axis changed at the transmitting side or inversely transform the transformed coordinates into xyz orthogonal coordinates.

According to embodiments, the geometry information output from the geometry information predictor 65006 may be output to the attribute decoder 61004 through a geometry restoration process 65009. According to embodiments, an attribute information entropy decoder 67001 of the attribute decoder 61004 may entropy decode residual information included in an input attribute bitstream. The attribute information entropy decoder 7001 may additionally entropy decode prediction mode information for attribute decoding.

An attribute information predictor 67002 according to embodiments restores attribute information by performing a reverse process on the transmitting side according to entropy-coded residual information and/or prediction mode information.

The attribute information restoration method may include reverse processes of a Predicting Transform coding method, a Lift Transform coding method, and an RAHT coding method.

According to embodiments, the restored attribute information may be provided to a color inverse transformation processor 67004 through an attribute information inverse quantization processor 67003 and restored to RGB color. That is, the color inverse transformation processor 67004 performs inverse transformation coding to inversely convert a color value (or texture) included in the restored attribute information and outputs the same to the post-processor 61005. The color inverse transformation processor 67004 performs operations and/or inverse coding that are the same or similar to the operations and/or inverse coding of the color inverse transformer 11010 of FIG. 11 or the color inverse transform processor 13010 of FIG. 13.

The post-processor 61005 matches the geometry information (i.e., positions) restored and output from the geometry decoder 61003 and the attribute information restored and output from the attribute decoder 61004 to reconstruct point cloud data. When the reconstructed point cloud data is in tile and/or slice units, the post-processor 61005 may perform a reverse process of spatial partitioning at the transmitter side based on signaling information.

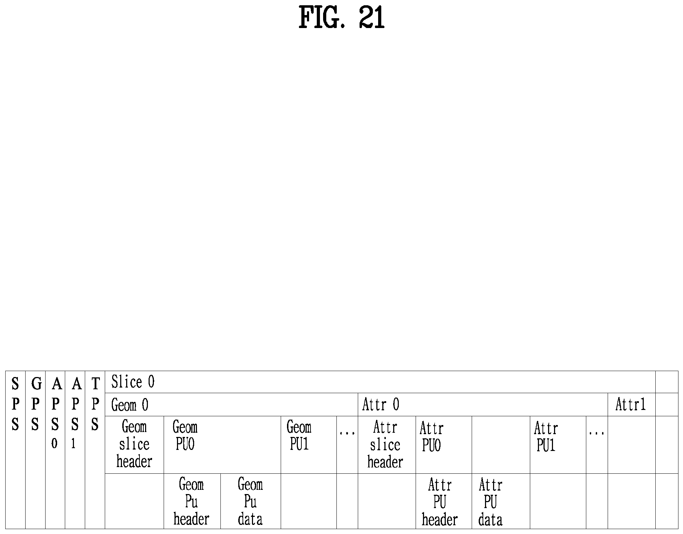

FIG. 21 illustrates an example of a bitstream structure of point cloud data for transmission/reception according to embodiment.

According to embodiments, in FIG. 21, the term "slice" may be referred to as "data unit".

In addition, in FIG. 21, each abbreviation has the following meaning. Each abbreviation may be referred to by another term within the scope of the equivalent meaning. SPS: Sequence Parameter Set; GPS: Geometry Parameter Set; APS: Attribute Parameter Set; TPS: Tile Parameter Set; Geom: Geometry bitstream = geometry slice header+ [geometry PU header + Geometry PU data] | geometry slice data); Attr: attributes (Attribute bitstream = attribute data unit header + [attribute PU header + attribute PU data] | attribute data unit data).

The present disclosure may signal related information in order to add/perform the embodiments described so far. Signaling information according to embodiments may be used in a point cloud video encoder at the transmitting side or a point cloud video decoder at the receiving side.

The point cloud video encoder according to the embodiments may generate a bitstream as shown in FIG. 21 by encoding geometry information and attribute information as described above. In addition, signaling information related to the point cloud data may be generated and processed in at least one of the geometry encoder, the attribute encoder, or the signaling processor of the point cloud video encoder, and may be included in the bitstream.

As an example, the point cloud video encoder configured to perform geometry encoding and/or attribute encoding may generate an encoded point cloud (or a bitstream including the point cloud) as shown in FIG. 21. In addition, signaling information related to the point cloud data may be generated and processed by the metadata processor of the point cloud data transmission device, and be included in the point cloud as shown in FIG. 21.

The signaling information according to the embodiments may be received/obtained by at least one of the geometry decoder, the attribute decoder, or the signaling processor of the point cloud video decoder.

A bitstream according to embodiments may be divided into a geometry bitstream, an attribute bitstream, and a signaling bitstream and transmitted/received, or one combined bitstream may be transmitted/received.

When a geometry bitstream, an attribute bitstream, and a signaling bitstream according to embodiments are configured as one bitstream, the bitstream may include one or more sub-bitstreams. The bitstream according to the embodiments may include a sequence parameter set (SPS) for sequence level signaling, a geometry parameter set (GPS) for signaling of geometry information coding, one or more attribute parameter sets (APSs) (APS0, APS1) for signaling of attribute information coding, a tile parameter set (TPS) for tile level signaling, and one or more slices (slice 0 to slice n). That is, a bitstream of point cloud data according to embodiments may include one or more tiles, and each of the tiles may be a group of slices including one or more slices (slice 0 to slice n). The TPS according to the embodiments may contain information about each of the one or more tiles (e.g., coordinate value information and height/size information about the bounding box). Each slice may include one geometry bitstream (Geom0) and one or more attribute bitstreams (Attr0 and Attr1). For example, a first slice (slice 0) may include one geometry bitstream (Geom0) and one or more attribute bitstreams (Attr0, Attr1).

Each slice or geometry bitstream (or called geometry slice) may be composed of a geometry slice header and one or more geometry PUs (Geom PU0, Geom PU1). Each geometry PU (Prediction Unit) may be composed of a geometry PU header (geom PU header) and geometry PU data (geom PU data).

Each attribute bitstream (or called an attribute slice) in each slice may be composed of an attribute slice header and one or more attribute PUs (Attr PU0, Attr PU1). Each attribute PU may be composed of an attribute PU header (attr PU header) and attribute PU data (attr PU data).

According to embodiments, inter-prediction-related option information may be added to and signaled in the SPS, GPS and/or the TPS.

According to embodiments, the inter-prediction-related option information may be added to and signaled in the geometry slice header for each slice.

The inter-prediction-related option information according to embodiments may be signaled in geometry prediction tree data (geometry_predtree_data()). The geometry prediction tree data (geometry_predtree_data()) may be included in a geometry slice (or a geometry data unit).

According to embodiments, parameters required for encoding and/or decoding of point cloud data may be newly defined in parameter sets (e.g., SPS, GPS, APS, and TPS (or referred to as a tile inventory), etc.) of the point cloud data and/or the header of the corresponding slice. For example, they may be added to the GPS in encoding and/or decoding of geometry information, and may be added to the tile (TPS) and/or slice header in tile-based encoding and/or decoding. Also, when PU-based encoding and/or decoding is performed, the parameters may be added to the geometry PU header and/or attribute PU header.

The regions of the bitstream may have different importance levels. Accordingly, when the point cloud data is partitioned into tiles, different filters (encoding methods) or different filter units may be applied to the respective tiles. When the point cloud data is partitioned into slices, different filters or different filter units may be applied to the respective slices. In addition, when the point cloud data is divided into PUs, different filters and different filter units may be applied to the PUs, respectively.

By transmitting the point cloud data according to the bitstream structure as shown in FIG. 21, the transmission device according to the embodiments may allow the encoding operation to be applied differently according to the importance level, and allow a good-quality encoding method to be used in an important region. In addition, it may support efficient encoding and transmission according to the characteristics of the point cloud data and provide attribute values according to user requirements.

As the reception device according to the embodiments receives the point cloud data according to the bitstream structure as shown in FIG. 21, it may apply different filtering (decoding methods) to the respective regions (divided into tiles or slices) according to the processing capacity of the reception device, rather than using a complex decoding (filtering) method to the entire point cloud data. Thereby, a better image quality may be provided for regions important to the user and appropriate latency may be ensured in the system.

As described above, a tile or a slice is provided to process the point cloud data by partitioning the point cloud data by region. In partitioning the point cloud data by region, an option to generate a different set of neighbor points for each region may be set. Thereby, a selection method having low complexity and slightly lower reliability, or a selection method having high complexity and high reliability I may be provided.

According to embodiments, the inter-prediction-related option information may include information for identifying the number of frames in the GoF (numofFramesinGOF), information indicating a type of frame in the GoF (typeofGOF), prediction mode information for each point, and/or inter flag information (inter_flag).

From among the inter-prediction-related option information, information for identifying the number of frames in GoF (numofFramesinGOF) and information indicating a type of frame in GoF (typeofGOF) are included in at least one of SPS, GPS, TPS, or geometry slice headers.

From among the inter-prediction-related option information, prediction mode information for each point and/or inter flag information (inter_flag) may be included in geometry prediction tree data (geometry_predtree_data()). The geometry prediction tree data (geometry_predtree_data()) may be included in a geometry slice (or a geometry data unit).

A field, which is a term used in syntaxes that will be described later in the present disclosure, may have the same meaning as a parameter or a syntax element.

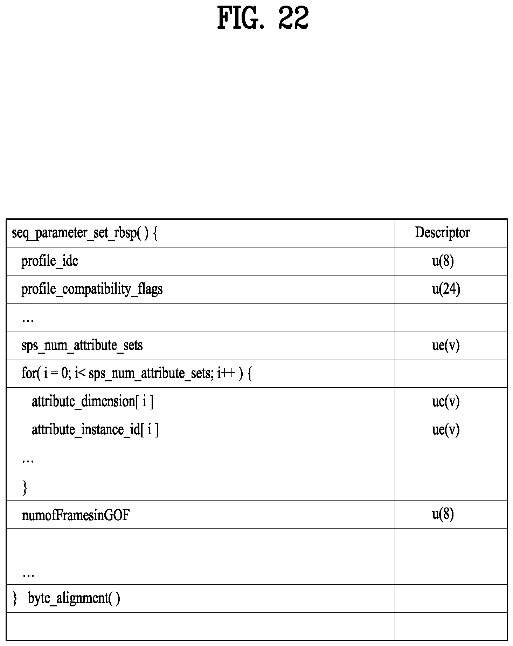

FIG. 22 shows an embodiment of a syntax structure of a sequence parameter set (SPS) (seq_parameter_set_rbsp()) according to the present disclosure. The SPS may include sequence information about a point cloud data bitstream. In particular, in this example, the SPS includes neighbor point selection-related option information.

The SPS according to the embodiments may include a profile_idc field, a profile_compatibility_flags field, a level_idc field, an sps_bounding_box_present_flag field, an sps_source_scale_factor field, an sps_seq_parameter_set_id field, an sps_num_attribute_sets field and so on.

The profile_idc field indicates a profile to which the bitstream conforms.

The profile_compatibility_flags field equal to 1 may indicate that the bitstream conforms to the profile indicated by profile_idc.

The level_idc field indicates a level to which the bitstream conforms.

The sps_bounding__box_present _flag field indicates whether source bounding box information is signaled in the SPS. The source bounding box information may include offset and size information about the source bounding box. For example, the sps_bounding_box_present_flag field equal to 1 indicates that the source bounding box information is signaled in the SPS. The sps_bounding_box_present_flag field equal to 0 indicates the source bounding box information is not signaled. The sps_source_scale_factor field indicates the scale factor of the source point cloud.

The sps_seq_parameter_set_id field provides an identifier for the SPS for reference by other syntax elements.

The sps_num_attribute_sets field indicates the number of coded attributes in the bitstream.

The SPS may further include an attribute_dimension [i] field and an attribute_instance_id [i] field that are repeated as much as a value of the sps_num_attribute_sets field.

The attribute_dimension[i] field indicates the number of components of an i-th attribute.

The attribute_instance_id[ i ] field indicates an instance identifier of an i-th attribute.

The SPS may further include a numofFramesinGoF field.

The numofFramesinGoF field specifies the number of frames constituting the GoF in the corresponding sequence. In the present disclosure, the numofFramesinGoF field may be referred to as inter-prediction-related option information. According to embodiments, the numofFramesinGoF field may be included at any position in the SPS.

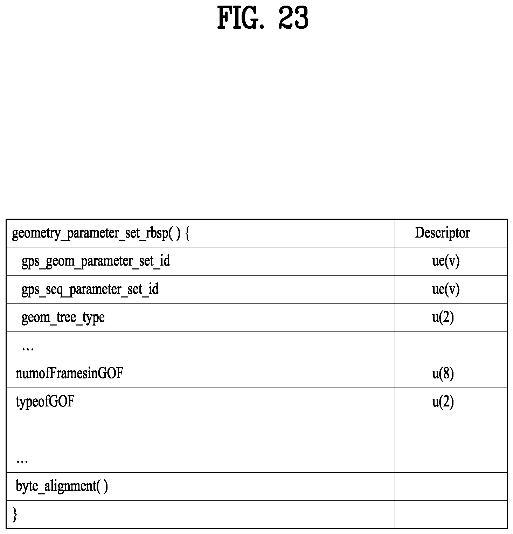

FIG. 23 is a diagram showing a syntax structure of a geometry parameter set (GPS) (geometry_parameter_set()) according to an embodiment of the present disclosure. The GPS according to embodiments may include information about a method of encoding geometry information of point cloud data included in one or more slices.

The GPS according to embodiments may include a gps_geom_parameter_set_id field, a gps_seq_parameter_set_id field, a geom_tree_type field, a numofFramesinGOF field, and a typeofGOF field.

The gps_geom_parameter_set_id field provides an identifier for the GPS for reference by other syntax elements.

The gps_seq_parameter_set_id field specifies the value of sps_seq_parameter_set_id for the active SPS.

The geom_tree_type field indicates a coding type of geometry information. For example, when a value of the geom_tree_ype field is 0, this may indicate that the geometry information (i.e., location information) is coded using an octree, and when the field is 1, this may indicate that the geometry information is coded using a prediction tree.

The numofFramesinGoF field specifies the number of frames constituting the GoF in the corresponding frame.

The typeofGOF field may specify a GoF type (or GoF structure) of the frame included in the GoF. For example, when a value of the typeofGOF field is 0, this may indicate the IPPP structure, when the value is 1, this may indicate the IPPBPP structure, and when the value is 2, this may indicate the IBBPBB structure.

In the present disclosure, the numofFramesinGoF field and the typeofGOF field are referred to as inter-prediction-related option information. According to embodiments, the numofFramesinGoF field and the typeofGOF field may be included at any position in the GPS.

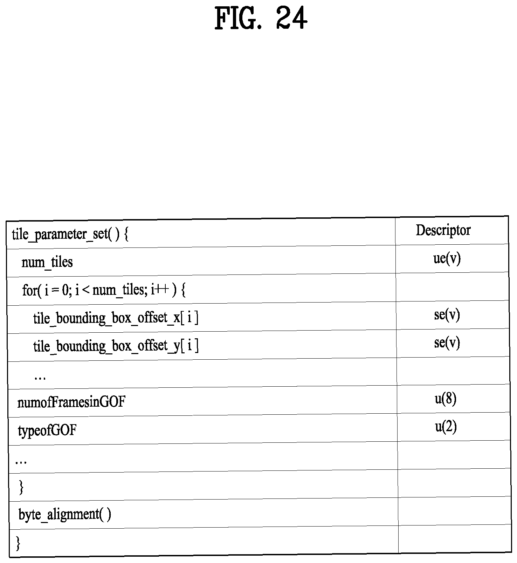

FIG. 24 shows a syntax structure of a tile parameter set (tile_parameter_set()) (TPS) according to an embodiment of the present disclosure. According to embodiments, the TPS may be referred to as a tile inventory. The TPS according to the embodiments includes information related to each tile.

The TPS according to the embodiments includes a num_tiles field.

The num_tiles field indicates the number of tiles signaled for the bitstream. When not present, num_tiles is inferred to be 0.

The TPS according to the embodiments includes an iteration statement repeated as many times as the value of the num_tiles field. In an embodiment, i is initialized to 0, and is incremented by 1 each time the iteration statement is executed. The iteration statement is repeated until the value of i becomes equal to the value of the num_tiles field. The iteration statement may include a tile_bounding_box_offset_x[i] field, a tile_bounding_box_offset_y[i] field, a tile_bounding_box_offset_z[i] field, a tile_bounding_box_size_width[i] field, a tile_bounding_box_size_height[i] field, a tile_bounding_box_size_depth[i] field, numofFramesinGoF field, and typeofGOF field.

The tile_bounding_box_offset_x[i] field indicates the x offset of the i-th tile in the Cartesian coordinates.

The tile_bounding_box_offset_y[i] field indicates the y offset of the i-th tile in the Cartesian coordinates.

The tile_bounding_box_offset_z[i] field indicates the z offset of the i-th tile in the Cartesian coordinates.

The tile_bounding_box_size_width[i] field indicates the width of the i-th tile in the Cartesian coordinates.

The tile_bounding_box_size_height[i] field indicates the height of the i-th tile in the Cartesian coordinates.

The tile_bounding_box_size_depth[i] field indicates the depth of the i-th tile in the Cartesian coordinates.

The numofFramesinGoF field specifies the number of frames constituting a GoF in an i-th tile.

The typeofGOF field may specify a GoF type (or GoF structure) of the frame included in the GoF in an i-th tile. For example, when a value of the typeofGOF field is 0, this may indicate the IPPP structure, when the value is 1, this may indicate the IPPBPP structure, and when the value is 2, this may indicate the IBBPBB structure.

In the present disclosure, the numofFramesinGoF field and the typeofGOF field are referred to as inter-prediction-related option information. According to embodiments, the numofFramesinGoF field and the typeofGOF field may be included at any position in the TPS.

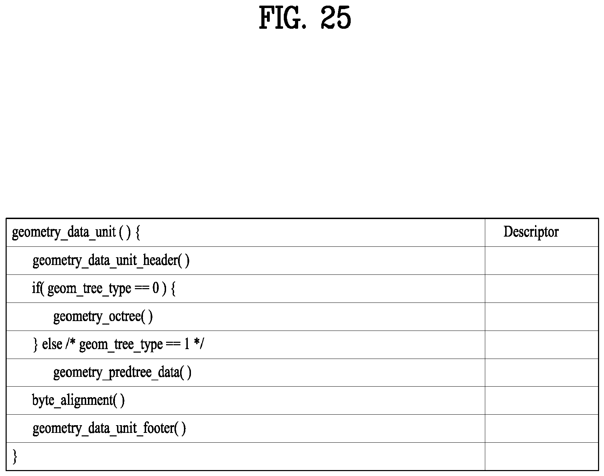

FIG. 25 is a diagram showing an example of a syntax structure of a geometry data unit (geometry_data_unit()) according to embodiments.

The geometry data unit (geometry_data_unit()) according to embodiments includes a geometry data unit header (geometry_data_unit_header()), byte_alignment(), and geometry_data_unit_footer(). A geometry data unit header (geometry_data_unit_header()) is used with the same meaning as the geometry slice header (geometry_slice_header()).

The geometry data unit (geometry_data_unit()) according to embodiments further includes geometry octree data (geometry_octree()) when a value of the geom_tree_type field included in the geometry parameter set is 0, and further includes the geometry prediction tree data (geometry_predtree_data()) when the value is 1.

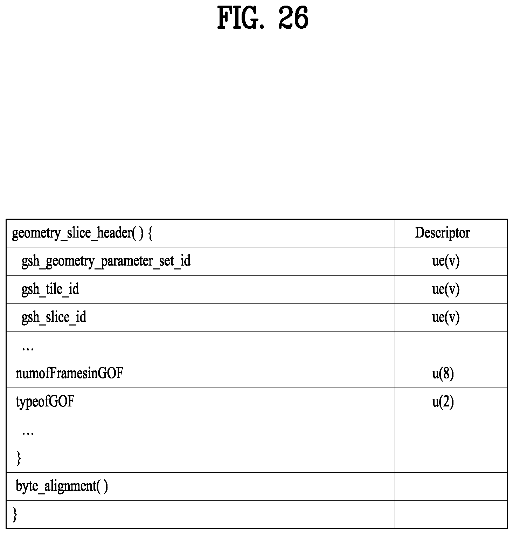

FIG. 26 is a diagram showing an example of a syntax structure of a geometry slice header (geometry_slice_header()) according to embodiments. The geometry slice header (geometry_slice_header()) may be referred to as a geometry data unit header (geometry_data_unit_header()).

A bitstream transmitted by a transmission device (or a bitstream received by a reception device) according to embodiments may include one or more slices. Each slice may include a geometry slice and an attribute slice. The geometry slice includes a geometry slice header (GSH). The attribute slice includes an attribute slice header (ASH).

The geometry slice header (geometry_slice_header()) according to embodiments may include a gsh_geom_parameter_set_id field, a gsh_tile_id field, a gsh_slice_id field, , and a numofFramesinGoF field and the typeofGOF field.

The gsh_geom_parameter_set_id field specifies the value of the gps_geom_parameter_set_id of the active GPS.

The gsh_tile_id field represents an identifier of the corresponding tile referenced by the corresponding geometry slice header (GSH).

The gsh_slice_id represents an identifier of the corresponding slice for reference by other syntax elements.

The numofFramesinGoF field specifies the number of frames constituting the GoF in the corresponding slice.

The typeofGOF field may specify a GoF type (or GoF structure) of the frame included in the GoF in the corresponding slice. For example, when a value of the typeofGOF field is 0, this may indicate the IPPP structure, when the value is 1, this may indicate the IPPBPP structure, and when the value is 2, this may indicate the IBBPBB structure.

In the present disclosure, the numofFramesinGoF field and the typeofGOF field are referred to as inter-prediction-related option information. According to embodiments, the numofFramesinGoF field and the typeofGOF field may be included at any position in the geometry slice header.

The geometry data unit (geometry _data _unit()) of FIG. 25 according to embodiments further includes geometry octree data (geometry _octree()) when a value of the geom_tree_type field included in the geometry parameter set is 0, and further includes the geometry prediction tree data (geometry_predtree_data()) when the value is 1.

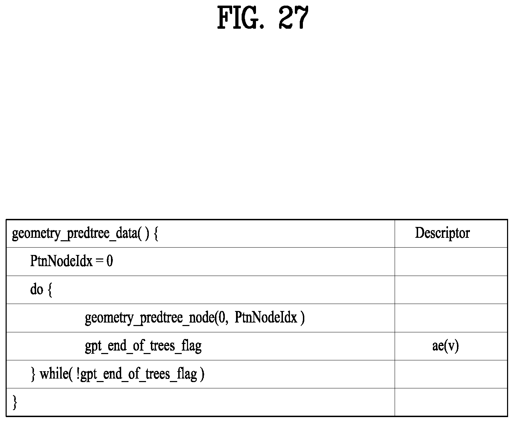

FIG. 27 is a diagram showing an example of a syntax structure of a geometry prediction tree data (geometry_predtree_data()) according to embodiments.

According to embodiments, whether intra/inter restoration of each point is performed using a reference frame may be signaled in the geometry prediction tree data (geometry_predtree_data()). In particular, the numofFramesinGoF field and/or the typeofGOF field may be combined with each other and may be efficiently signaled to support inter-prediction. The name of signaling information may be understood within the scope of the meaning and function of signaling information.

According to embodiments, the geometry prediction tree data (geometry_predtree_data()) of FIG. 27 may be included in the geometry data unit of FIG. 25. The geometry prediction tree data (geometry_predtree_data()) may be included in geometry slice data or geometry data unit data.

In FIG. 27, the PtnNodeIdx field specifies a node index.

The geometry prediction tree data (geometry_predtree_data()) starts with a variable PtnNodeIdx=0 and includes a loop that ends when a value of the gpt_end_of_trees_flag field is false. This loop includes the fields geometry_predtree_node(PtnNodeIdx) and gpt_end_of_trees_flag.

The variable PtnNodeIdx is a counter used to iterate over parsed predictive tree nodes in a depth-first order. The variable PtnNodeIdx is initialized to 0 at the start of the decoding process and incremented during the recursive traversal of the tree.

The gpt_end_of_trees_flag field equal to 0 specifies that another predictive tree is following in the data unit. When the value of the gpt_end_of_trees_flag field is 1, this indicates that there is no prediction tree present in the data unit.

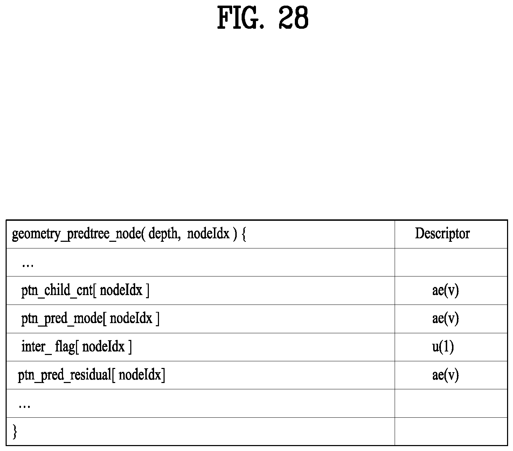

FIG. 28 is a diagram showing an example of a syntax structure of a geometry_predtree_node (depth, nodeIdx).

That is, in one embodiment, the geometry_predtree_node(depth, nodeIdx) in FIG. 28 signals prediction-based geometry compression information.

To this end, the geometry_predtree_node(depth, nodeIdx) may include a ptn_child_cnt[ nodeIdx ] field, ptn_pred_mode[ nodeIdx ], an inter_flag[ nodeIdx ] field, and a ptn_pred_residual [ nodeIdx ] field.

The ptn_child_cnt[nodeIdx] field indicates the number of direct child nodes of the current prediction tree node that exists in the geometry prediction tree.

The ptn_pred_mode[ nodeIdx ] indicates a node used to predict a position related to the current node.

The inter_flag[ nodeIdx ] field may specify whether information to restore a point needs to be referenced from a matching point list generated through a reference frame. For example, the inter _flag[nodeIdx] field indicates false when the prediction mode selected through RDO at the transmitting side is the intra prediction mode and indicates true when the prediction mode is the inter prediction mode.

The ptn_pred_residual [nodeIdx] field specifies a residual value (or residual information) that is a difference between the predicted value (i.e., the position value of the predicted point) and the position value of the current point.

As described above, in preparation for a scenario requiring a low-latency service, for example, a case in which point cloud data from LiDAR needs to be captured and transmitted in real time, or a case in which a service that requires receiving and processing 3D map data in real time is provided, it may be necessary to shorten an encoding and decoding time. According to the present disclosure, latency may be reduced by shortening an encoding and decoding time by starting encoding, streaming, and decoding only a portion of point cloud even if the entire point cloud information is not available.

According to the present disclosure, a size of a bitstream may be maintained while reducing latency of a geometry information compression scheme by allowing inter prediction to be performed when compressing geometry information based on a prediction tree.

Accordingly, embodiments provide a point cloud content stream by increasing geometry compression efficiency of an encoder/decoder of Geometry-based Point Cloud Compression (G-PCC) for compressing 3D point cloud data.

The PCC encoder and/or PCC decoder according to embodiments may provide an efficient inter prediction method and increase geometry compression coding/decoding efficiency by considering a correlation between frames.

The operation of the transmission and reception device according to the above-described embodiments may be explained in combination with the point cloud compression processing process below.

Therefore, the transmission method/device according to embodiments may efficiently compress point cloud data and transmit data, and the reception method/device according to embodiments may also efficiently decode/restore the point cloud data by transmitting signaling information for the efficient compression.

The operations of the above-described embodiments may be performed through components of a point cloud transmission and reception device/method including a memory and/or a processor. The memory may store programs for processing/controlling operations according to embodiments. Each component of the point cloud transmitting and receiving device/method according to embodiments may correspond to hardware, software, processor, and/or a combination thereof. The processor may control various operations described in the present disclosure. The processor may be referred to as a controller, or the like. In embodiments, operations may be performed by firmware, software, and/or a combination thereof, and the firmware, software, and/or a combination thereof may be stored in a processor or stored in memory. In the present embodiment, a method for compressing geometry information of point cloud data is described, but the method described herein may be applied to attribute information compression and other compression methods.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "... module (or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

**MODE FOR DISCLOSURE**

The details have been specifically described in the best mode for the disclosure.

**INDUSTRIAL APPLICABILITY**

It will be apparent to those skilled in the art that various modifications and variations are possible without departing from the spirit or scope of the embodiments. Thus, it is intended that the embodiments cover the modifications and variations of the embodiments provided they come within the appended claims and their equivalents.

**Claims**

1. A point cloud data transmission method comprising:

   encoding geometry data of point cloud data;
   encoding attribute data of the point cloud data based on the geometry data; and
   transmitting the encoded geometry data, the encoded attribute data, and signaling data,
   wherein the encoding the geometry data includes compressing the geometry data by applying inter prediction to the geometry data, and
   wherein the signaling data includes inter prediction related information.

2. The point cloud data transmission method of claim 1, wherein the encoding the geometry data includes:

generating point information for matching of points belonging to a current frame and one or more reference frames in group of frames (GoF) in which the point cloud data is configured as a plurality of frames; and compressing the geometry data by applying the inter prediction to the geometry data based on the point information.

3. The point cloud data transmission method of claim 2, wherein the encoding the geometry data includes:

obtaining one or more inter prediction modes of a current point of the current frame based on information on a number of frames in the GoF and a type of a frame in the GoF; selecting an optimal inter prediction mode from among the obtained one or more inter prediction modes; and obtaining residual information of the current point based on the selected inter prediction mode and position information of the current point.

4. The point cloud data transmission method of claim 3, wherein the inter prediction related information includes information for identifying the number of the frames in the GoF and information for indicating a type of a frame in the GoF.

5. The point cloud data transmission method of claim 3, wherein the point cloud data is captured by a LiDAR including one or more lasers.

6. The point cloud data transmission method of claim 5, wherein the encoding the geometry data includes matching points having a closest azimuth, radius, elevation, or laser ID to points for inter prediction from among points of the current frame and the one or more reference frames.

7. A point cloud data transmitting device comprising:

a geometry encoder configured to encode geometry data of point cloud data; an attribute encoder configured to encode attribute data of the point cloud data based on the geometry data; and a transmitter configured to transmit the encoded geometry data, the encoded attribute data, and signaling data, wherein the geometry encoder compresses the geometry data by applying inter prediction, and wherein the signaling data includes inter prediction related information.

8. The point cloud data transmitting device of claim 7, wherein the geometry encoder is configured to generate point information for matching of points belonging to a current frame and one or more reference frames in group of frames (GoF) in which the point cloud data is configured as a plurality of frames and compress the geometry data by applying the inter prediction to the geometry data based on the point information.

9. The point cloud data transmitting device of claim 8, wherein the geometry encoder is configured to obtain one or more inter prediction modes of a current point of a current frame based on information on a number of frames in the GoF and a type of a frame in the GoF, select an optimal inter prediction mode from among the obtained one or more inter prediction modes, and obtain residual information of the current point based on the selected inter prediction mode and position information of the current point.

10. The point cloud data transmitting device of claim 9, wherein the inter prediction related information includes information for identifying the number of the frames in the GoF and information for indicating a type of a frame in the GoF.

11. The point cloud data transmitting device of claim 9, wherein the point cloud data is captured by a LiDAR including one or more lasers.

12. The point cloud data transmitting device of claim 11, wherein the geometry encoder is configured to match points having a closest azimuth, radius, elevation, or laser ID to points for inter prediction from among points of the current frame and the one or more reference frames.

13. A point cloud data reception method comprising:

receiving geometry data, attribute data, and signaling data; decoding the geometry data based on the signaling data; decoding the attribute data based on the signaling data and the decoded geometry data; and

rendering point cloud data based on the decoded geometry data and the decoded attribute data,
wherein the decoding the geometry data includes restoring the geometry data by applying inter prediction to the geometry data based on the signaling data, and
wherein the signaling data includes inter prediction related information.

14. The point cloud data reception method of claim 13, wherein the inter prediction related information includes information for identifying a number of frames in group of frames (GoF), information for indicating a type of a frame in the GoF, and prediction mode information for each point.

15. The point cloud data reception method of claim 13, wherein the point cloud data is captured by a LiDAR including one or more lasers at a transmitting side.

# FIG. 1

# FIG. 2

EP 4 429 248 A1

FIG. 3

# FIG. 4

positions

attributes

40000 — Transform coordinates

40006 — Transform colors

40001 — Quantize and remove points (voxelize)

40007 — Transfer attributes

40002 — Analyze octree

Reconstruct geometry

RAHT

40009 — Generate LOD

40003 — Analyze surface approximation

40008

40010 — Lifting

40011 — Quantize coefficients

40004 — Arithmetic encode

40005

40012 — Arithmetic encode

geometry bitstream

attribute bitstream

# FIG. 5

# FIG. 6

# FIG. 7

4

16

2          1

32

8

y

z

x

4

2          1

8

$1 + 2 + 4 + 8 = 15$

## FIG. 8

Level of details

# FIG. 9

Original order

| P0, P1, P2, P3, P4, P5, P6, P7, P8, P9 |
|---|

LOD-based order

| P0, P5, P4, P2 | P1, P6, P3 | P9, P8, P7 |
|---|---|---|

LOD0

LOD1

LOD2

# FIG. 10

# FIG. 11

geometry
bitstream

attribute
bitstream

11000 — Arithmetic decode

11005 — Arithmetic decode

11001 — Synthesize
octree

11006 — Inverse quantize

11002 — synthesize surface
approximation

11007

11003 — Reconstruct
geometry

RAHT

11008 — Generate
LOD

11004 — Inverse transform
coordinates

11009 — Inverse
lifting

11010 — Inverse transform colors

positions

attributes

# FIG. 12

# FIG. 13

Receive

| 13000 | Receiver |

| 13001 | Reception processor |

Geometry bitstream        Set value, etc.        Attribute bitstream

13006

| 13002 | Arithmetic decoder | | Metadata parser | | Arithmetic decoder | 13007 |

| 13003 | Occupancy code-based octree reconstruction processor | | | | Inverse quantization processor | 13008 |

| 13004 | Surface model processor (triangle reconstruction, up-sampling, voxelization) | | | | Prediction /lifting/RAHT inverse transform processor | 13009 |

| 13005 | Inverse quantization processor | | | | Color inverse transform processor | 13010 |

Sharing reconstructed position values

| Renderer | 13011 |

# FIG. 14

Home Appliance —17500

17600— AI Server

Smartphone —17400

17000

17300

Cloud Network
( 5G )

XR device

17100— Robot

HMD —17700

Self - Driving Vehicle —17200

# FIG. 15

(Root vertex)
50010

(Branch vertex
with 3 children)
50014

(Branch vertex
with 2 children)
50015

50011

50013

50012
(Branch
vertex with
one child)

Leaf vertex

# FIG. 16

I  P  P  P  P

GOF(Group Of Frame)

# FIG. 17

EP 4 429 248 A1

## FIG. 18

# FIG. 19

## FIG. 20

Geometry bitstream

geometry information entropy decoder — 65001

restored geometry coding type? (65002 / 65004)

Octree-based coding

65003 — Octree reconstructor | Prediction tree reconstructor

Prediction-based coding ...

65005 — Geometry position reconstructor

65006 — Geometry information predictor

65007 — Inverse-quantization processor

65008 — Coordinates inverse transformer

Geometry information

Restored geometry information — 65009

61003

Attribute bitstream

61004

Attribute information entropy decoder — 67001

Attribute information predictor — 67002

Attribute information inverse quantization processor — 67003

Color inverse transformation processor — 67004

Attribute information

EP 4 429 248 A1

# FIG. 21

| S P S | G P S | A P S 0 | A P S 1 | T P S | Slice 0 | | | | | | | | | | |
|---|---|---|---|---|---|---|---|---|---|---|---|---|---|---|---|
| | | | | | Geom 0 | | | | | Attr 0 | | | | Attr1 | |
| | | | | | Geom slice header | Geom PU0 | | Geom PU1 | ... | Attr slice header | Attr PU0 | | Attr PU1 | ... | |
| | | | | | | Geom Pu header | Geom Pu data | | | | Attr PU header | Attr PU data | | | |

# FIG. 22

| seq_parameter_set_rbsp( ) { | Descriptor |
|---|---|
| profile_idc | u(8) |
| profile_compatibility_flags | u(24) |
| … | |
| sps_num_attribute_sets | ue(v) |
| for( i = 0; i< sps_num_attribute_sets; i++ ) { | |
| attribute_dimension[ i ] | ue(v) |
| attribute_instance_id[ i ] | ue(v) |
| … | |
| } | |
| numofFramesinGOF | u(8) |
| | |
| … | |
| } byte_alignment( ) | |
| | |

# FIG. 23

| geometry_parameter_set_rbsp( ) { | Descriptor |
|---|---|
| gps_geom_parameter_set_id | ue(v) |
| gps_seq_parameter_set_id | ue(v) |
| geom_tree_type | u(2) |
| ... | |
| numofFramesinGOF | u(8) |
| typeofGOF | u(2) |
| | |
| ... | |
| byte_alignment( ) | |
| } | |

# FIG. 24

| tile_parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| ... | |
| numofFramesinGOF | u(8) |
| typeofGOF | u(2) |
| ... | |
| } | |
| byte_alignment( ) | |
| } | |

# FIG. 25

| geometry_data_unit ( ) { | Descriptor |
|---|---|
| geometry_data_unit_header( ) | |
| if( geom_tree_type == 0 ) { | |
| geometry_octree( ) | |
| } else /* geom_tree_type == 1 */ | |
| geometry_predtree_data( ) | |
| byte_alignment( ) | |
| geometry_data_unit_footer( ) | |
| } | |

# FIG. 26

| geometry_slice_header( ) { | Descriptor |
|---|---|
| gsh_geometry_parameter_set_id | ue(v) |
| gsh_tile_id | ue(v) |
| gsh_slice_id | ue(v) |
| … | |
| numofFramesinGOF | u(8) |
| typeofGOF | u(2) |
| … | |
| } | |
| byte_alignment( ) | |
| } | |

# FIG. 27

| geometry_predtree_data( ) { | Descriptor |
|---|---|
| PtnNodeIdx = 0 | |
| do { | |
| geometry_predtree_node(0, PtnNodeIdx ) | |
| gpt_end_of_trees_flag | ae(v) |
| } while( !gpt_end_of_trees_flag ) | |
| } | |

# FIG. 28

| geometry_predtree_node( depth, nodeIdx ) { | Descriptor |
|---|---|
| … | |
| ptn_child_cnt[ nodeIdx ] | ae(v) |
| ptn_pred_mode[ nodeIdx ] | ae(v) |
| inter_ flag[ nodeIdx ] | u(1) |
| ptn_pred_residual[ nodeIdx] | ae(v) |
| … | |
| } | |

| | INTERNATIONAL SEARCH REPORT | International application No. |
|---|---|---|
| | | **PCT/KR2022/017036** |

**A. CLASSIFICATION OF SUBJECT MATTER**

**H04N 19/54**(2014.01)i; **H04N 19/70**(2014.01)i; **H04N 19/96**(2014.01)i; **H04N 19/597**(2014.01)i; **H04N 19/44**(2014.01)i; **H04N 19/105**(2014.01)i

According to International Patent Classification (IPC) or to both national classification and IPC

**B. FIELDS SEARCHED**

Minimum documentation searched (classification system followed by classification symbols)

H04N 19/54(2014.01); G06T 3/00(2006.01); G06T 9/00(2006.01); H04N 19/172(2014.01); H04N 19/184(2014.01); H04N 19/52(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 인터 예측(inter prediction), 시그널링(signaling), GoF(Group of Frames), 참조(reference), 프레임(frame), 매칭(matching)

**C. DOCUMENTS CONSIDERED TO BE RELEVANT**

| Category* | Citation of document, with indication, where appropriate, of the relevant passages | Relevant to claim No. |
|---|---|---|
| X | WO 2021-215849 A1 (LG ELECTRONICS INC.) 28 October 2021.<br>See paragraphs [0080], [0097], [0345] and [0384]; claims 1-2, 5 and 11-12; and figures 1 and 33. | 1,7,13,15 |
| Y | | 2,8 |
| A | | 3-6,9-12,14 |
| Y | US 2021-0201540 A1 (HUAWEI TECHNOLOGIES CO., LTD.) 01 July 2021 (2021-07-01)<br>See claim 8. | 2,8 |
| A | WO 2021-003229 A1 (APPLE INC.) 07 January 2021 (2021-01-07)<br>See paragraphs [0003]-[0016]; and claims 1-8. | 1-15 |
| A | US 2020-0258262 A1 (INTERDIGITAL VC HOLDINGS, INC.) 13 August 2020 (2020-08-13)<br>See paragraphs [0016]-[0040]; and claims 23-32. | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2022/017036** |

**C.     DOCUMENTS CONSIDERED TO BE RELEVANT**

| Category* | Citation of document, with indication, where appropriate, of the relevant passages | Relevant to claim No. |
|---|---|---|
| A | US 2021-0281874 A1 (BLACKBERRY LIMITED) 09 September 2021 (2021-09-09)<br>See paragraphs [0027]-[0048]; and claims 1-5. | 1-15 |

Form PCT/ISA/210 (second sheet) (July 2022)

| INTERNATIONAL SEARCH REPORT | International application No. |
| Information on patent family members | |
| | **PCT/KR2022/017036** |

| Patent document cited in search report | | | Publication date (day/month/year) | Patent family member(s) | | | Publication date (day/month/year) |
|---|---|---|---|---|---|---|---|
| WO | 2021-215849 | A1 | 28 October 2021 | None | | | |
| US | 2021-0201540 | A1 | 01 July 2021 | CN | 110944187 | A | 31 March 2020 |
| | | | | CN | 110944187 | B | 10 May 2022 |
| | | | | EP | 3849188 | A1 | 14 July 2021 |
| | | | | WO | 2020-057338 | A1 | 26 March 2020 |
| WO | 2021-003229 | A1 | 07 January 2021 | CN | 114175661 | A | 11 March 2022 |
| | | | | US | 2021-0006833 | A1 | 07 January 2021 |
| US | 2020-0258262 | A1 | 13 August 2020 | CN | 111386551 | A | 07 July 2020 |
| | | | | EP | 3474231 | A1 | 24 April 2019 |
| | | | | EP | 3474232 | A1 | 24 April 2019 |
| | | | | EP | 3698328 | A1 | 26 August 2020 |
| | | | | WO | 2019-079093 | A1 | 25 April 2019 |
| US | 2021-0281874 | A1 | 09 September 2021 | EP | 3595181 | A1 | 15 January 2020 |
| | | | | US | 11310525 | B2 | 19 April 2022 |
| | | | | WO | 2020-010446 | A1 | 16 January 2020 |

Form PCT/ISA/210 (patent family annex) (July 2022)